# EUROPEAN PATENT APPLICATION

(11) **EP 4 561 249 A1**
(43) Date of publication of application: **28.05.2025**
(21) Application number: 23854999.2
(22) Date of filing: 13.06.2023
(51) Int. Cl.: H04W 76/10, H04W 88/08, H04W 88/12, H04W 92/04, H04W 92/12, H04W 92/20, H04W 92/24

(54) **DEVICE AND METHOD FOR PROVIDING PROTOCOL VERSION**

(30) Priority: 19.08.2022 KR 20220104392; 25.04.2023 KR 20230054361
(71) Applicant: Samsung Electronics Co., Ltd., Suwon-si, Gyeonggi-do 16677 (KR)
(72) Inventor: SONG, Junhyuk, Suwon-si, Gyeonggi-do 16677 (KR); KHO, Youngsung, Suwon-si, Gyeonggi-do 16677 (KR); KIM, Chulmin, Suwon-si, Gyeonggi-do 16677 (KR); PARK, Soyeun, Suwon-si, Gyeonggi-do 16677 (KR); LEE, Chungkeun, Suwon-si, Gyeonggi-do 16677 (KR)
(74) Representative: Gulde & Partner
(86) International application number: PCT/KR2023/008154
(87) International publication number: WO 2024/039028

(57) **Abstract**

The present disclosure relates to a 5th generation (5G) or pre-5G communication system for supporting higher data transmission rates than 4th generation (4G) systems such as long term evolution (LTE). According to embodiments, a method performed by an E2 node may comprise a step for transmitting an E2 setup request message to a Near-real time (RT) radio access network (RAN) intelligent controller (RIC). The method may include a step for receiving the E2 setup response message from the RIC. The E2 setup request message may include information for identifying the interface type of the E2 node and information for identifying the communication protocol version corresponding to the interface type.

## Description

### TECHNICAL FIELD

The disclosure relates generally to an apparatus and a method for providing a specification version.

### BACKGROUND ART

5th generation (5G) communication system or a pre-5G communication system has been developed or improved to meet the growing demand for wireless data traffic since the 4th generation (4G) communication system was commercialized. For this reason, the 5G communication system or the pre-5G communication system is often referred to as a Beyond 4G network communication system or a Post LTE (Long Term Evolution) system.

In order to achieve a high data rate, the 5G communication system is being considered for implementation in an ultra-high frequency (mmWave) band (e.g., 60 giga-hertz (GHz) band). Further, in order to mitigate the path loss of radio waves and increase transmission distances of radio waves in the ultra-high frequency band, advanced technologies, such as beamforming, Massive MIMO, and Full Dimensional MIMO (FD-MIMO), array antenna, analog beam-forming, and large-scale antenna technologies are being discussed and developed for the 5G communication systems.

Further, in order to improve networks in the 5G communication system, technologies for evolved small cell and advanced small cell, such as cloud radio access network (cloud RAN), ultra-dense network, device to device (D2D) communication, wireless backhaul, moving network, cooperative communication, coordinated multi-points (CoMP), receive interference cancellation or the like are being developed.

In addition, in the 5G communication system, an advanced coding modulation (ACM) methods, such as e.g., FQAM (Hybrid Frequency Shift Keying and Quadrature Amplitude Modulation) and SWSC (Sliding Window Superposition Coding) are being developed. Also, an advanced access technologies, such as e.g., FBMC (Filter Bank Multi Carrier), Non-Orthogonal Multiple Access (NOMA), and Sparse Code Multiple Access (SCMA), are being developed.

In order to meet the demand for radio data traffic, the 5G communication system (NR (new radio or next radio)) has been commercialized. The 5G communication system provides a user with a high data rate service like the 4G communication system. In addition, the 5G communication system provides a wireless communication service with various purposes (such as Internet of Things (IoT) and a service that requires high reliability for a specific purpose, and others. In a system where the 4th generation communication system is mixed with the 5th generation system, an open radio access network (O-RAN) defines an interface specification with a new network element (NE) based on a 3rd generation partnership project (3GPP) specification and presents the ORAN structure. The O-RAN is established by a gathering of operators and equipment providers.

### DISCLOSURE

### Technical Solution

According to one or more embodiments, a method performed by a first base station, includes: transmitting, to a network controller, an E2 setup request message; and receiving, from the network controller, an E2 setup response message. The E2 setup request message includes: information on an interface type of the first base station, and version information of a 3rd generation partnership project (3GPP) standard corresponding to the interface type.

According to one or more embodiments, a method performed by a network controller, includes: receiving, from a first base station, an E2 setup request message; and transmitting, to the first base station, an E2 setup response message. The E2 setup request message includes: information on an interface type of a first base station, and version information of a 3rd generation partnership project (3GPP) standard corresponding to the interface type.

According to one or more embodiments, a first base station includes: at least one transceiver; and at least one processor electrically connected to the at least one transceiver. The at least one processor is configured to: transmit, to a network controller, an E2 setup request message, and receive, from the network controller, an E2 setup response message. The E2 setup request message includes: information on an interface type of the first base station, and version information of a 3rd generation partnership project (3GPP) standard corresponding to the interface type.

According to one or more embodiments, a network controller includes: at least one transceiver; and at least one processor coupled to the at least one transceiver. The at least one processor is configured to: receive, from a first base station, an E2 setup request message, and transmit, to the first base station, an E2 setup response message. The E2 setup request message includes: information on an interface type of a first base station, and version information of a 3rd generation partnership project (3GPP) standard corresponding to the interface type.

According to one or more embodiments, a method performed by an E2 node includes transmitting, to a Near-real time (RT) radio access network (RAN) intelligent controller (RIC), an E2 setup request message. The method includes receiving, from the near-RT RIC, an E2 setup response message. The E2 setup request message includes information for identifying an interface type of the E2 node and information for identifying a version of a communication protocol corresponding to the interface type.

According to one or more embodiments, a method performed by a Near-real time (RT) radio access network (RAN) intelligent controller (RIC) includes receiving, from an E2 node, an E2 setup request message. The method includes transmitting, to the E2 node, an E2 setup response message. The E2 setup request message includes information for identifying an interface type of the E2 node and information for identifying a version of a communication protocol corresponding to the interface type.

According to one or more embodiments, a device of an E2 node includes at least one transceiver and at least one processor coupled to the at least one transceiver. The at least one processor is configured to transmit, to a Near-real time (RT) radio access network (RAN) intelligent controller (RIC), an E2 setup request message. The at least one processor is configured to receive, from the near-RT RIC, an E2 setup response message. The E2 setup request message includes information for identifying an interface type of the E2 node and information for identifying a version of a communication protocol corresponding to the interface type.

According to one or more embodiments, a device of a Near-real time (RT) radio access network (RAN) intelligent controller (RIC) includes at least one transceiver and at least one processor coupled to the at least one transceiver. The at least one processor is configured to receive, from an E2 node, an E2 setup request message. The at least one processor is configured to transmit, to the E2 node, an E2 setup response message. The E2 setup request message includes information for identifying an interface type of the E2 node and information for identifying a version of a communication protocol corresponding to the interface type.

### DESCRIPTION OF THE DRAWINGS

FIG. 1 illustrates an example of a 4th generation (4G) Long Term Evolution (LTE) core system;
FIG. 2A illustrates an example of a 5th generation (5G) non-standard alone (NSA) system;
FIG. 2B illustrates an example of an architecture for open radio access network (O-RAN);
FIG. 3 illustrates a protocol stack of an E2 application protocol message in a radio access network according to one or more embodiments;
FIG. 4 illustrates an example of a connection between a base station and a radio access network (RAN) intelligence controller (RIC) in a radio access network according to one or more embodiments;
FIG. 5 illustrates a configuration of an apparatus in a radio access network according to one or more embodiments;
FIG. 6 illustrates logical functions related to an E2 message of an RIC and an E2 node in a radio access network according to one or more embodiments;
FIG. 7 illustrates examples of functional separation between an E2 node and an RIC according to one or more embodiments;
FIG. 8 illustrates an example of implementation of an E2 node and an RIC according to one or more embodiments;
FIG. 9 illustrates examples of functional separation between a centralized unit (CU) and an RIC according to one or more embodiments;
FIG. 10 illustrates an example of transmitting a version number of an E2 application protocol (E2AP) specification according to one or more embodiments;
FIG. 11A, 11B and 11C illustrate an example of an E2 setup request message for providing a version number of a 3GPP specification, according to one or more embodiments;
FIGS. 12A to 12D illustrate examples of E2 node configuration information for providing a version number of a 3GPP specification according to one or more embodiments;
FIG. 13 illustrates an example of a dual connectivity (DC) related function based on a version number of a 3GPP specification according one or more embodiments; and
FIG. 14 illustrates an example of a cross-link interference (CLI) related function according to a version number of a 3GPP specification according to one or more embodiments.
FIG. 15 illustrates an example of a RIC service update procedure for providing a version number of a 3GPP specification according to one or more embodiments.

### MODE FOR INVENTION

The terms used in the disclosure are merely used to better describe a certain embodiment and are not intended to limit the scope of other embodiments thereto. A singular expression may include a plural expression unless the context clearly dictates otherwise. The terms used herein, including technical and scientific terms, may have the same meanings as those commonly understood by those skilled in the art to which the disclosure pertains. Terms defined in a general dictionary amongst the terms used in the disclosure may be interpreted as having the same or similar meaning as those in the context of the related art, and they are not to be construed in an ideal or overly formal sense, unless explicitly defined in the disclosure. In some cases, even the terms defined in the disclosure shall not be interpreted to exclude embodiments of the disclosure.

In various examples of the disclosure described below, a hardware approach will be described as an example. However, since one or more embodiments of the disclosure include a technology that utilizes both the hardware and the software, they are not intended to exclude the software-based approach.

Hereinafter, the disclosure relates to a control procedure between a device in a radio access network (RAN) and a device controlling the RAN in a wireless communication system. More particular, the disclosure relates to a procedure, messages, and a method for enabling an E2 node and a RAN Intelligence Controller (RIC) to operate properly in accordance with a certain standard, by providing, by the E2 node, the RIC with a version number (e.g., '16.2.0' for Technical Specification (TS) 38.473 v16.2.0) of a 3GPP specification (e.g., TS 38.473, TS 38.423, TS 38.463, TS 38.413, TS 36.423) on an E2 interface.

As used in the following description, the terms referring to a configuration (e.g., setup, setting, arrangement, control), the terms referring to a signal (e.g., packet, message, signal, information, signaling), the terms referring to a resource (e.g., section, symbol, slot, subframe, radio frame, subcarrier, resource element (RE), resource block (RB), bandwidth part (BWP), occasion), the terms for indicating an operating state (e.g., step, operation, procedure), the terms referring to data (e.g., packet, message, user stream, information, bit, symbol, codeword), the terms referring to a channel, the terms referring to network entities (distributed unit (DU), radio unit (RU), central unit (CU), control plane (CU-CP), O-DU (O-RAN(open radio access network) DU), O-RU (O-RAN RU), O-CU (O-RAN CU), O-CU-UP (O-RAN CU-CP), O-CU-CP (O-RAN CU-CP)), the terms referring to components of an apparatus, and so on are illustrated for convenience of description. Therefore, the disclosure is not limited to those terms described below, and other terms having equivalent technical meanings thereto may be used therefor. In addition, as used herein, the terms such as e.g., '... unit', '... module', '... group', '... part' may mean at least one form of structure or a unit that processes a certain function.

Further, throughout the disclosure, an expression such as e.g., 'above (or exceeding)' or 'below' may be used to determine whether a specific condition is satisfied or fulfilled, but it is merely of a description for expressing an example and is not intended to exclude the meaning of 'more than or equal to' or 'less than or equal to'. A condition described as 'more than or equal to' may be replaced with 'above', a condition described as 'less than or equal to' may be replaced with 'below', and a condition described as 'more than or equal to' and 'below' may be replaced with 'above' and 'less than or equal to', respectively. Further, unless explicitly dictated otherwise, 'A' to 'B' is intended to mean at least one of the elements from A to (inclusive of A) and B (inclusive of B). Hereinafter, unless explicitly dictated otherwise, 'C' and/or 'D' is intended to mean at least one of 'C' or 'D', that is, {'C', 'D', 'C' and 'D'}.

Further, the disclosure describes one or more embodiments using the terms used in some communication standard specifications (e.g., 3rd Generation Partnership Project (3GPP), extensible radio access network (xRAN), open-radio access network (O-RAN), but they are merely of an example for description. One or more embodiments of the disclosure may be easily modified and applied even in other communication systems.

Under the existing specification of 3GPP, non-backward compatible issues may occur frequently.

Provided are an apparatus and a method for controlling an E2 node by a radio access network (RAN) intelligent controller (RIC) in a radio access network. Provided are an apparatus and a method for controlling an E2 node through an E2 message in accordance with an open radio access network (O-RAN) specification of a wireless communication system.

Further, provided are an apparatus and a method for transmitting a 3rd generation partnership project (3GPP) specification number of an E2 node to a radio access network (RAN) intelligent controller (RIC) in a wireless communication system.

According to embodiments of the disclosure, an apparatus and a method may make it possible for the RIC to perform a specific radio communication control function according to a 3GPP release version, by providing, by an E2 node, a radio access network (RAN) intelligent controller (RIC) with a version of the 3GPP specification related to an E2 node (e.g., a central unit (CU) or a control plane (CU-CP)) in a wireless communication system. Further, the apparatus and the method may provide a function that enhances the mutual compatibility of an E2 interface, by enabling the RIC to effectively control the E2 node irrespectively of the 3GPP specification compatibility of a base station.

Effects obtained from the disclosure are not limited to those described above, and any other effects not mentioned herein will be clearly understood by those having ordinary knowledge in the art to which the disclosure belongs, from the following description.

Along with the commercialization of 4G communication system and 5G communication systems (e.g., New Radio (NR)), differentiated service supports have been ever required for users in a virtualized network. Thus, the 3GPP has been originated from a joint research project between several mobile communication-related organizations, aiming to create a 3G mobile communication system specification, globally applicable, within the scope of IMT-2000 project of the International Telecommunication Union (ITU).

The 3GPP was established in December 1998, and the 3GPP specification is based on the advanced GSM standard, including all of radio, core network, and service architecture in the standardization range. Accordingly, the O-RAN has newly defined RU (radio unit), DU (digital unit), CU (central unit) - CP (control plane), and CU-UP (user plane), which are nodes constituting a 3GPP network entity (NE) and a base station, as O(O-RAN)-RU, O-DU, O-CU-CP, and O-CU-UP, respectively, and additionally standardized the near-real-time (near-RT) radio access network intelligent controller (RIC).

According to one or more embodiments, the disclosure is directed to an operator specific service model in an E2 interface in which an RIC requests a service from O-DU, O-CU-CP or O-CU-UP. Here, O-RU, O-DU, O-CU-CP, and O-CU-UP may be understood as objects constituting a RAN capable of operating according to an O-RAN standard, and may be referred to as 'E2 nodes.' An interface with the objects constituting the RAN capable of operating according to the O-RAN standard between the RIC and the E2 nodes uses an E2AP, which is an application protocol.

The RIC is a logical node that may collect information on a cell site where a terminal, an O-DU, an O-CU-CP, or an O-CU-UP transmits and receives. The RIC may be implemented in the form of servers concentrated in one physical location. Connections may be established between O-DU and RIC, between O-CU-CP and RIC, and between O-CU-UP and RIC through Ethernet. To this end, the interface standard specification for communication between O-DU and RIC, between O-CU-CP and RIC, and between O-CU-UP and RIC are required, and the definitions of the message specification for E2-DU, E2-CU-CP, E2-CU-UP or the like and the procedures between O-DU, O-CU-CP, O-CU-UP and RIC are required as well. In particular, it is necessary to define the functions of E2-DU, E2-CU-CP, and E2-CU-UP messages for supporting services for a wide range of cell coverage, as the differentiated service support is required for users in a virtualized network and the call processing messages/functions generated in the O-RAN are concentrated on the RIC. In am embodiment, the RIC may be referred as a network controller or a RAN controller, etc.

The RIC may perform communications with O-DU, O-CU-CP, and O-CU-UP using the E2 interface, and generate and transmit a subscription message to set event occurrence conditions. More specifically, the RIC may generate an E2 subscription request message and transfer the same to an E2 node (e.g., O-CU-CP, O-CU-UP, O-DU) to set a call processing EVENT. Further, subsequent to setting the call processing EVENT, the E2 node may transmit a subscription request response message transferred to the RIC.

The E2 node may transmit the current status to the RIC through an E2 indication/report. The RIC may use an E2 control message to control O-DU, O-CU-CP, and O-CU-UP. One or more embodiments of the disclosure propose an E2 indication message that transmits a UE unit of measurement information for each period set in a subscription event condition in the O-DU. Furthermore, one or more embodiments of the disclosure propose a message for controlling a resource transmitted from the RIC to the O-DU.

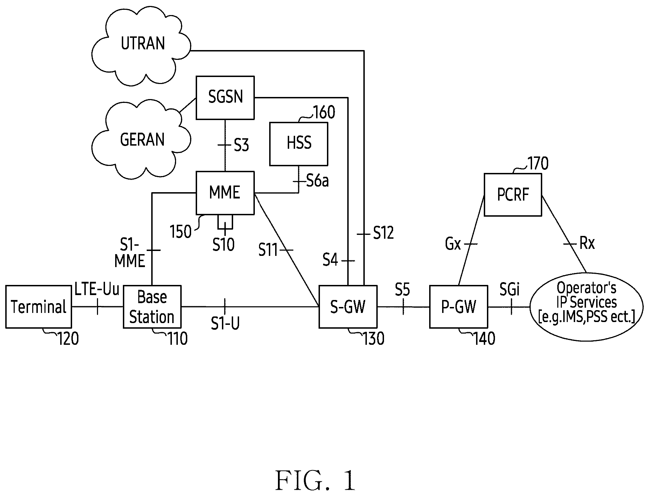

FIG. 1 illustrates an example of a 4G (fourth generation) LTE (Long Term Evolution) core system.

Referring to FIG. 1, the LTE core system includes a base station 110, a terminal 120, a serving gateway (S-GW) 130, a packet data network gateway (P-GW) 140, a mobility management entity (MME) 150, a home subscriber server (HSS) 160, and a policy and charging rule function (PCRF) 170.

The base station 110 is a network infrastructure that provides wireless access to the terminal 120. For example, the base station 110 is an apparatus that collects state information of the terminal 120, such as a buffer state, an available transmission power, or a channel state, to perform scheduling. The base station 110 has a coverage defined as a certain geographic area based on a distance capable of transmitting a signal. The base station 110 is connected to the MME 150 through an S1-MME interface. In addition, the base station 110 may be also referred to as 'access point (AP)', 'eNodeB (eNB)', 'wireless point', 'transmission/reception point (TRP)', or other terms having an equivalent technical meaning thereto.

The terminal 120, which is a device used by a user, performs communications with the base station 110 through a radio channel. In some cases, the terminal 120 may be operated without any user involvement. For example, the terminal 120 may be a device to perform machine-type communication (MTC), and may not be carried by a user. Further, the terminal 120 may be referred to as 'user equipment (UE)', 'mobile station', 'subscriber station', 'customer-premises equipment (CPE)', 'remote terminal', 'wireless terminal', 'user device', or any other term having an equivalent meaning thereto.

The S-GW 130 provides a data bearer, and generates or controls the data bearer under the control of the MME 150. For example, the S-GW 130 may process packets arriving from the base station 110 or packets to be forwarded to the base station 110. Further, the S-GW 130 may serve as an anchor during handover of the terminal 120 between base stations. The P-GW 140 may serve as a connection point with an external network (e.g., an Internet network). Further, the P-GW 140 may allocate an Internet Protocol (IP) address to the terminal 120 and serves as an anchor for the S-GW 130. Further, the P-GW 140 may apply a quality of service (QoS) policy of the terminal 120 and manage account data.

The MME 150 manages mobility of the terminal 120. Further, the MME 150 may perform authentication, bearer management, and so on for the terminal 120. That is to say, the MME 150 is in charge of mobility management and various control functions for the terminal. The MME 150 may be associated with a serving GPRS support node (SGSN).

The HSS 160 stores key information and subscriber profile for authentication of the terminal 120. The key information and the subscriber profile are transmitted from the HSS 160 to the MME 150 when the terminal 120 makes access to a network.

The PCRF 170 defines rules for the policy and the charging. The stored information is transmitted from the PCRF 170 to the P-GW 140, and the P-GW 140 may perform control (e.g., QoS management, charging, etc.) of the terminal 120 based on the information provided from the PCRF 170.

Carrier aggregation (hereinafter, referred to as 'CA') may be capable of combining multiple component carriers and transmitting/receiving signals using such multiple component carriers at the same time, thereby increasing the efficiency of frequency use from the viewpoint of a terminal or a base station. Specifically, according to the CA technology, the terminal and the base station may transmit and receive signals using a broadband, using multiple component carriers in uplink (UL) and downlink (DL), respectively. Each of the component carriers is located in a different frequency band. Hereinafter, the term 'uplink' refers to a communication link the terminal transmits a signal to the base station, and the term 'downlink' refers to a communication link the base station transmits a signal to the terminal. In such a circumstance, the number of uplink component carriers and downlink component carriers may be different from each other.

Dual connectivity or multi-connectivity may increase the efficiency of frequency use from the viewpoint of a terminal or base station, by having one terminal connected to multiple base stations to transmit and receive signals simultaneously using carriers in the multiple base stations located in different frequency bands. The terminal may be connected to a first base station (e.g., a base station providing services using LTE technology or 4G mobile communication technology) and a second base station (e.g., a base station providing services using NR technology or 5G mobile communication technology) at the same, to transmit and receive traffic. In such a case, the frequency resources used by each base station may be located in different bands. As such, a scheme that operates based on a dual connectivity with LTE and NR may be referred to as 5G non-standalone (NSA).

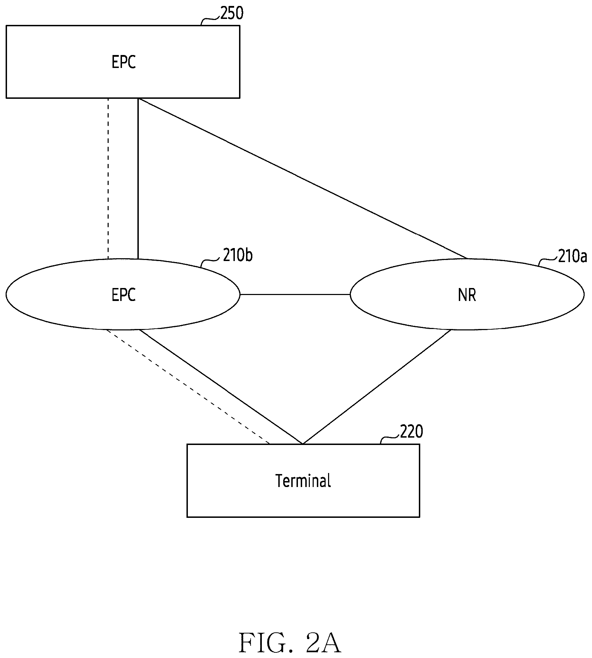

FIG. 2A illustrates an example of a 5G NSA system.

Referring to FIG. 2A, the 5G NSA system includes an NR RAN 210a, an LTE RAN 210b, a terminal 220, and an evaded packet core (EPC) 250. The NR RAN 210a and the LTE RAN 210b are connected to the EPC 250, and the terminal 220 may receive a service from either one or both of the NR RAN 210a and the LTE RAN 210b at the same time. The NR RAN 210a includes at least one NR base station, and the LTE RAN 210b includes at least one LTE base station. Here, the NR base station may be referred to as '5th generation (5G) node,' 'next generation nodeB (gNB),' or other terms having an equivalent technical meaning. Further, the NR base station may have a structure separated by a central unit (CU) and a digital unit (DU), and the CU may also have a structure separated by a control plane (CU-CP) unit and a user plane (CU-UP) unit.

In the structure shown in FIG. 2A, the terminal 220 may perform a radio resource control (RRC) connection through a first base station (e.g., a base station belonging to LTE RAN 210b) and may be served with a function (e.g., connection management, mobility management, etc.) provided in the control plane. Further, the terminal 220 may be provided with an additional radio resource for transmitting and receiving data through a second base station (e.g., a base station belonging to NR RAN 210a). Such dual connectivity technology using the LTE and the NR may be referred to as EN-DC (evolved universal terrestrial radio access (E-UTRA) - NR dual connectivity). Similarly, the dual connectivity technology that the first base station uses the NR technology and the second base station uses the LTE technology may be referred to as NR-DC (NR - E-UTRA dual connectivity). Further, one or more embodiments may be applied to various other forms of multi-connectivity and carrier aggregation technologies. Furthermore, one or more embodiments may be also applied in a case where a first system (using a first communication technology) and a second system (using a second communication technology) are implemented in one device, or in a case where a first base station and a second base station are located in the same geographical location.

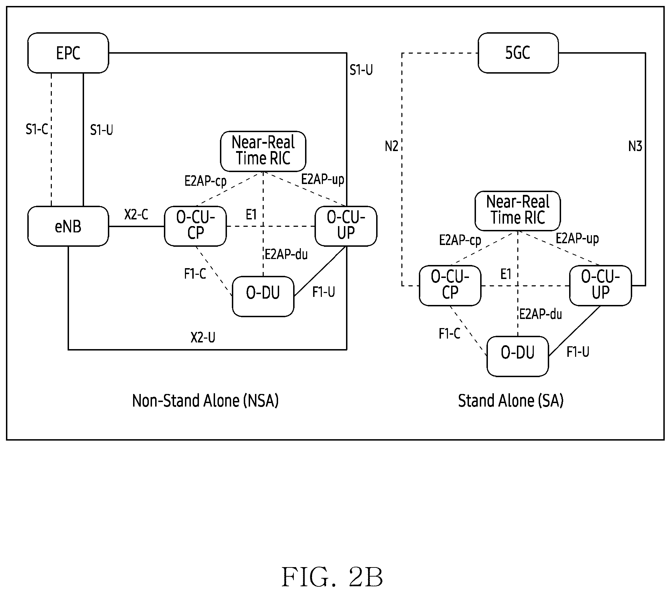

FIG. 2B illustrates an example of an architecture for O-RAN. For the purpose of E2-SM-KPIMON (key performance indicator (KPI) monitoring) of an E2 service model, an O-RAN NSA mode in multi-connectivity operation using E-UTRA and NR radio access technology may be considered, while the E2 node may be assumed to be in O-RAN standalone (SA) mode.

Referring to FIG. 2B, in deployment of the O-RAN NSA mode, the eNB may be connected to the EPC via an S1-C/S1-U interface, and may be connected to the O-CU-CP via an X2 interface. The O-CU-CP for deployment of the O-RAN SA mode may be connected to the 5GC (5G core) via an N2/N3 interface.

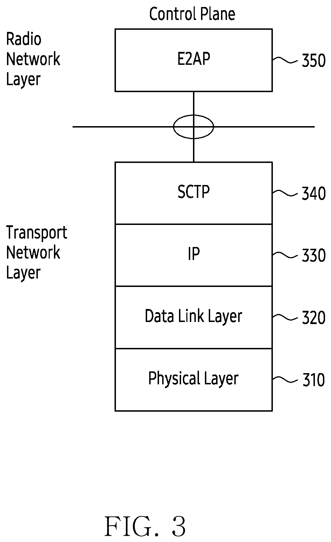

FIG. 3 illustrates an example of a protocol stack of an E2 application protocol message in a radio access network according to one or more embodiments. Referring to FIG. 3, a control plane includes a transport network layer and a radio network layer. The transport network layer includes a physical layer 310, a data link layer 320, an Internet protocol (IP) 330, and a stream control transmission protocol (SCTP) 340.

The radio network layer includes an E2AP 350. The E2AP 350 may be used to deliver a subscription message, an indication message, a control message, a service update message, and a service query message, and may be transmitted from a higher layer of the SCTP 340 and the IP 330.

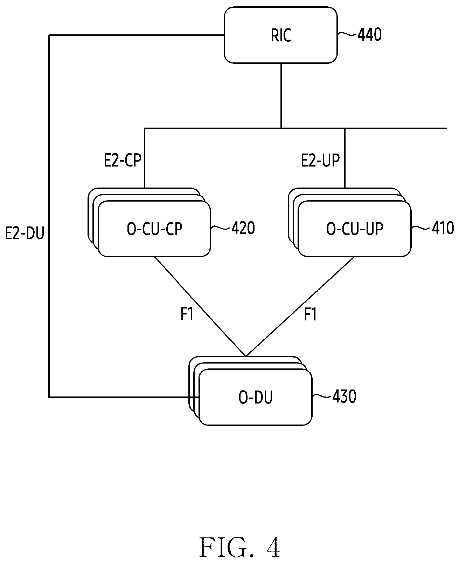

FIG. 4 illustrates an example of connection between a base station and a RIC in a radio access network according to one or more embodiments of the disclosure.

Referring to FIG. 4, the RIC 440 is connected to the O-CU-UP 410, the O-CU-CP 420, and the O-DU 430. The RIC 440 may customize the RAN functionality for new services or regional resource optimization. The RIC 440 may provide network intelligence (e.g., policy enforcement, handover optimization), resource assurance (e.g., radio-link management, advanced self-organized network (SON), resource control (e.g., load balancing, slicing policy) or the like. The RIC 440 may communicate with the O-CU-CP 420, the O-CU-UP 410, and the O-DU 430. The RIC 440 may be connected to each node through E2-CP, E2-UP, and E2-DU interfaces. Further, the interface between the O-CU-CP and the DU, and/or between the O-CU-UP and the DU may be referred to as an F1 interface. In the following description, DU and O-DU, CU-CP and O-CU-CP, and CU-UP and O-CU-UP may be respectively used interchangeably with each other.

Although FIG. 4 illustrates one RIC 440, a plurality of RICs may exist according to one or more embodiments. The plurality of RICs may be implemented with a plurality of hardware located in the same physical location or may be implemented by means of virtualization using one hardware.

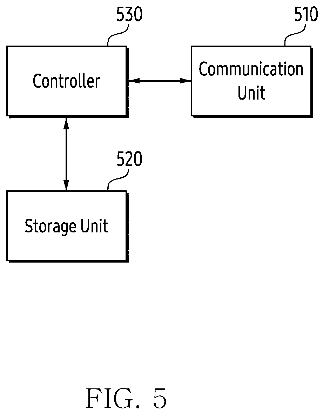

FIG. 5 illustrates an example of a configuration of an apparatus according to embodiments of the disclosure. The configuration illustrated in FIG. 5 may be understood as a configuration of a device having at least one function of near-RT RIC, non-RT RIC, O-CU-CP, O-CU-UP, and O-DU of FIG. 4. As used hereunder, the terms such as '~ module', '~ unit', '~ group', '~ part', or the like may refer to a unit that process at least one function or operation, which may be implemented as hardware, software, or a combination of hardware and software.

Referring to FIG. 5, a core network device includes a communication unit 510, a storage unit 520, and a controller 530.

The communication unit 510 provides an interface for performing communication with other devices in a network. In other words, the communication unit 510 converts a bit string transmitted from the core network device to another device into a physical signal and converts the physical signal received from the other device into a bit string. That is, the communication unit 510 may transmit and receive signals. Accordingly, the communication unit 510 may be referred to as a modem, a transmit unit, a receive unit, or a transmit/receive unit. In this case, the communication unit 510 enables the core network device to communicate with other devices or systems through a backhaul connection (e.g., wired backhaul or wireless backhaul) or through the network. The communication unit 510 may include one or more transceivers.

The storage unit 520 stores data such as e.g., a basic program, an application program, and setting information for an overall operation of the core network device. The storage 520 may include a volatile memory, a non-volatile memory, or a combination of the volatile memory and the non-volatile memory. Further, the storage unit 520 provides the stored data according to a request of the controller 530.

The controller 530 controls overall operations of the core network device. For example, the controller 530 transmits and receives signals through the communication unit 510. Further, the controller 530 records and reads data in/from the storage unit 520. To this end, the controller 530 may include at least one processor. According to one or more embodiments, the controller 530 may control the apparatus to perform operations according to one or more embodiments described in the disclosure.

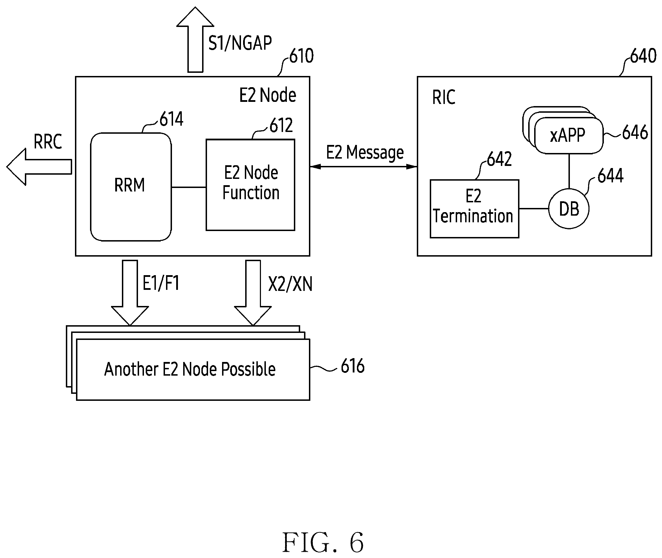

FIG. 6 illustrates a logical function related to an E2 message of an E2 node and an RIC in a radio access network according to embodiments of the disclosure.

Referring to FIG. 6, an RIC 640 and an E2 node 610 may transmit or receive E2 messages to/from each other. For example, the E2 node 610 may be an O-CU-CP, an O-CU-UP, an O-DU, or a base station. The communication interface of the E2 node may be determined depending upon the type of the E2 node 610. For example, the E2 node 610 may communicate with another E2 node 616 through an E1 interface or an F1 interface. Alternatively, for example, the E2 node 610 may communicate with the E2 node 616 via an X2 interface or an XN interface. Alternatively, for example, the E2 node 610 may perform communication through an S1 interface or a next generation application protocol (NGAP) interface (i.e., an interface between a next generation (NG) RAN node and an AMF).

The E2 node 610 may include an E2 node function 612. The E2 node function 612 corresponds to a specific xApp (application S/W) 646 installed in the RIC 640. For example, in case of a KPI monitor, KPI monitor collection S/W may be installed in the RIC 640, and the E2 node 610 may include the E2 node function 612 that generates KPI parameters and then delivers an E2 message including the KPI parameters to an E2 termination 642 located in the RIC 640. The E2 node 610 may include a radio resource management (RRM) 614. The E2 node 610 may manage resources provided to a radio network for a terminal. xApp 646 is an application designed to run on the Near-RT RIC. The application may consists of one or more microservices and at the point of on-boarding will identify which data it consumes and which data it provides. The application is independent of the Near-RT RIC and may be provided by any third party. The E2 interface enables a direct association between the xApp 646 and the RAN functionality.

The E2 termination 642 (located in the RIC 640) is a termination of the RIC 640 for the E2 message, and performs a function of interpreting the E2 message delivered (or transmitted) by the E2 node 610, and then, delivering the E2 message to the xApp 646. A database 644 (located in the RIC 640) may be used for the E2 termination 642 and the xApp 646. The E2 node 610 (shown in FIG. 6) is a terminal of at least one interface, and may be understood as a termination of messages transmitted to a terminal, a neighboring base station, and a core network.

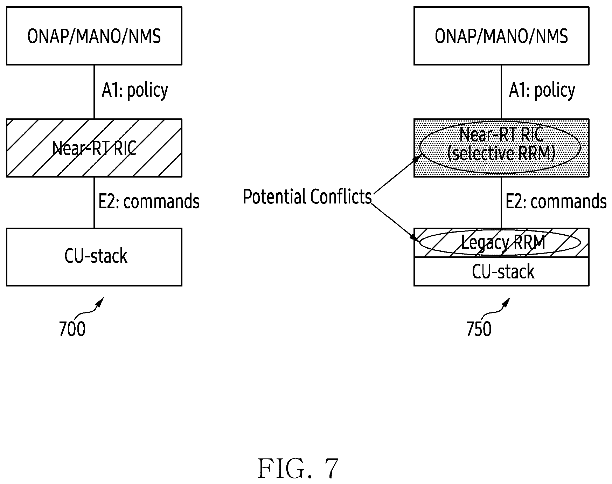

FIG. 7 illustrates examples of functional separations between an E2 node and an RIC according to one or more embodiments of the disclosure. The O-RAN specification provides functional separations between the E2 node and the RIC. For example, the E2 node may be a CU, and the RIC may be a near-RT RIC. The RIC may be connected to open network automation platform (ONAP) / management and orchestration (MANO) / network management system (NMS) through an A1 interface. The RIC may be connected to the E2 node through an E2 interface. The E2 interface may deliver commands. Functional separation options may include functional separation 700 that manages the entire radio resource management (RRM) in the near-RT RIC, and functional separation 750 that optionally manages the RRM in the near-RT RIC.

In related art, the near-RT RIC may support E2 with an open logical interface aimed at multiple vendor environments, regardless of the implementation of specific RRC-RRM algorithms or operations located in near-RT RIC. In one embodiment, E2SM-RIC (E2 Service Model Radio Interface Control) may be paired with E2SM-NI capable of performing injection/modification/configuration of a Per UE RRC message for each I/F and network entity. In other words, the near-RT RIC can be gradually improved from the function separation 750 toward the function separation 700. E2 interface may evolve into an open logical interface that may be independent of the implementation of a certain RRC-RRM algorithm or operation in the near-RT RIC and may aim at multi-vendor environments.

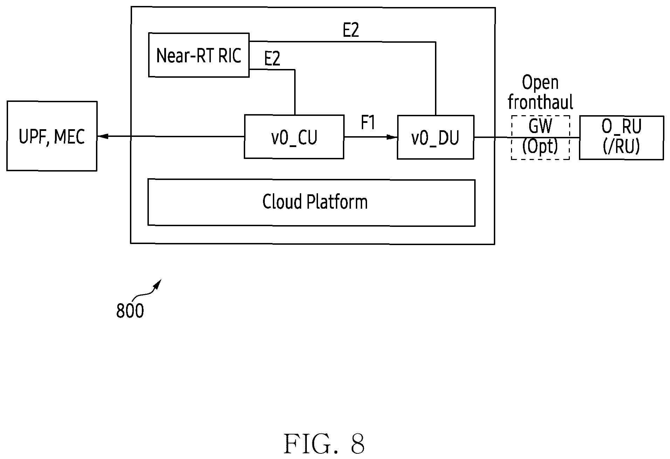

FIG. 8 illustrates an example of implementation of an E2 node and an RIC 810 according to one or more embodiments of the disclosure. In an example 800, the E2 node (e.g., O-DU 820, O-CU 830) and the RIC 810 may be virtualized on a cloud platform 840 (e.g., open chassis and blade-specification edge clouds) and configured in a device (e.g., a server). Such a scenario can support deployment in dense urban areas with abundant fronthaul capacity enabling baseband unit (BBU) functions pooled at a central location, with low latency enough to meet the O-DU latency requirements. In one embodiment, it may not be necessary to attempt to centralize the RIC close to RT beyond the limit capable of centralizing the O-DU functionality. According to an embodiment, E2SM-RIC may be optimized for an O-RAN deployment scenario in which near-RT RIC, O-CU, and O-DU are implemented in an O-Cloud Platform.

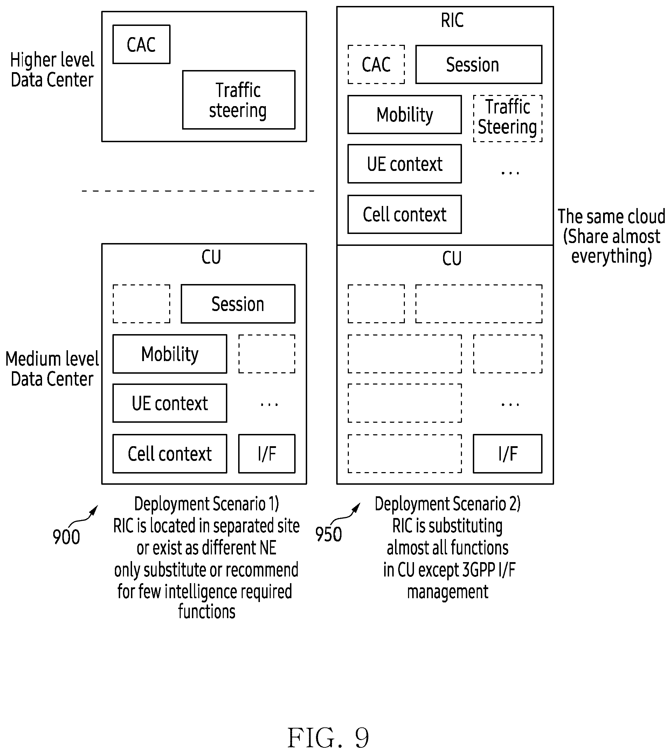

FIG. 9 illustrates examples of functional separations between a centralized unit (CU) 910 and an RIC 920 according to one or more embodiments of the disclosure. Referring to FIG. 9, the functional separations may be performed according to a deployment scenario #1 (example 900) or a functional deployment scenario #2 (example 950).

Deployment Scenario #1 (900): RIC is located at a separated site or exists only as a different Network Element (NE), and substitutes or recommends a few of intelligence required features.

Deployment Scenario #2 (950): RIC can substitute almost all functions of CU except 3GPP I/F management.

Although FIG. 9 illustrates two scenarios, other scenarios may be applied. For example, in the deployment scenario #1 (900), the mobility function may be performed by the RIC 920 rather than the CU 910. Further, for example, in the deployment scenario #1 (900), the UE context function may be performed by the RIC 920 and not the CU 910. Further, for example, in the deployment scenario #1 (900), the session setting function may be performed by the RIC 920, and not the CU 910.

The E2 setup procedure may be used to establish an E2 interface between the near-RT RIC and the E2 node. The E2 node may transmit an E2 setup request message to the near-RT RIC. The E2 setup request message may include RIC service and E2 node configuration information. The near-RT RIC may transmit an E2 setup response message to the E2 node. The E2 setup response message may include RIC service and E2 node configuration acknowledge.

Through the E2 setup procedure, the E2 node may provide a list of near-RT RIC services and functions supported in the E2 node and provide a mapping of services to functions. The provided information may be specific to each RAN function in the E2 node and may be defined by a specific E2 service model. The near-RT RIC may extract a list of mappings of services to supported near-RT RIC services and functions and store the information.

Through the E2 setup procedure, the E2 node may provide E2 node configuration information. The provided information may be defined by an E2 node type and an E2 node system specification. The near-RT RIC may extract a list of E2 node configuration information and store the information.

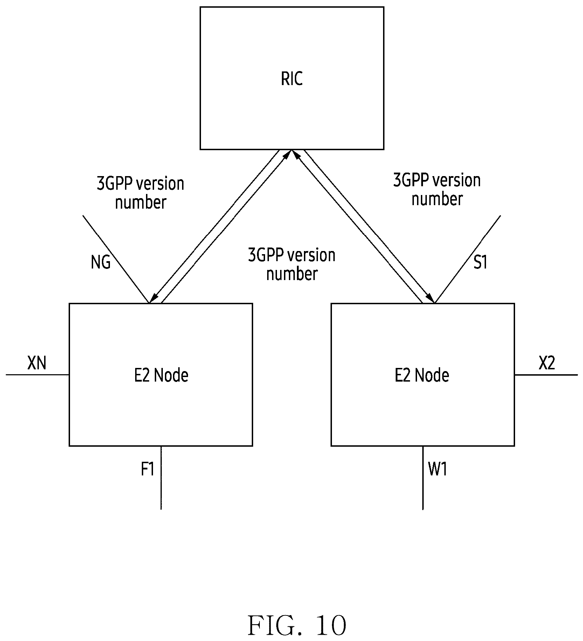

FIG. 10 illustrates an example of transmission of a version number of a 3rd generation partnership project (3GPP) specification according to one or more embodiments of the disclosure.

Referring to FIG. 10, an E2 node 1000 may provide a 3GPP specification number to a RIC 1100 (e.g., near-RT RIC). The 3GPP specification number may indicate a version number (e.g., 16.7.0, or 16.8.0) for the 3GPP specification (e.g., TS 38.423, TS 38.413).

The E2 node 1000 may support various interfaces depending on the node type. For example, the E2 node 1000 may be a gNB. The E2 node may support an NG interface and an XN interface. Further, for example, the E2 node 1000 may be an O-CU. The E2 node 1000 may support an NG interface, an XN interface, and an F1 interface. Additionally, the E2 node 1000 may be O-CU-CP or O-CU-UP, and may support an E1 interface. Further, for example, the E2 node 1000 may be an O-DU. The E2 node 1000 may support an F1 interface. Further, for example, the E2 node 1000 may be an eNB. The E2 node 1000 may support an S1 interface and an X2 interface. Further, for example, the E2 node 1000 may be an eNB-CU. The E2 node 1000 may support an S1 interface, an X2 interface, and a W1 interface. Further, for example, the E2 node 1000 may be an eNB-DU. The E2 node 1000 may support a W1 interface.

The specification distinguished from the viewpoint of an interface (I/F) of an E2 node 1000 according to embodiments of the disclosure and the version of the specification may vary. In order to control the E2 node 1000, the RIC 1100 is required to identify the 3GPP specification information of the E2 node 1000 for each I/F. The RIC 1100 may identify a version number (i.e., a release number) of the 3GPP specification for each I/F of the node. For example, the E2 node 1000 may be a non-virtualized 4G LTE eNB base station. In this case, the E2 node 1000 may support S1 I/F and/or X2 I/F. Even if I/F is the same as the S1 I/F or X2 I/F, their supporting standard functions may be different depending on each release version. For example, the X2 I/F has a different support function for each release version of the 3GPP specification TS 36.342. Further, for example, the S1 I/F has a different support function for each release version of the specification TS 36.413. For example, the following Table 1 shows the difference in release versions for the month when the specification for each I/F is released, on the basis of the 3GPP release 16.

**[Table 1]**

| **Standard Interface** | **Standard Specification** | **Publication Date** | **Release Version** | **Publication Date** | **Release Version** |
|---|---|---|---|---|---|
| X2 | 36.423 | Rel.16 2021-12 | V16.8.0 | Rel.16 2022-04 | V16.9.0 |
| Xn | 38.423 | Rel.16 2021-12 | V16.8.0 | Rel.16 2022-04 | V16.9.0 |
| F1 | 38.473 | Rel.16 2021-12 | V16.8.0 | Rel.16 2022-04 | V16.9.0 |
| S1 | 36.413 | Rel.16 2021-12 | V16.8.0 | Rel.16 2022-04 | V16.9.0 |
| E1 | 38.463 | Rel.16 2021-12 | V16.8.0 | Rel.16 2022-04 | V16.9.0 |
| NG | 38.413 | Rel.16 2021-12 | V16.8.0 | Rel.16 2022-04 | V16.9.0 |
| W1 | 37.473 | Rel.16 2021-12 | V16.7.0 | Rel.16 2022-04 | V16.8.0 |

Hereinafter, embodiments of the disclosure describe an E2 setup procedure as an example, but the disclosure is not limited thereto. The method of providing a version of the technical specification described in embodiments of the disclosure may be also applied in at least one of reset procedure, error indication, RIC service update procedure, E2 node configuration update procedure, and E2 connection update procedure.

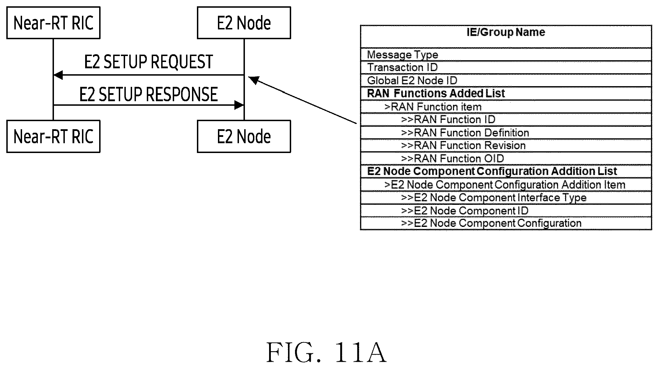

FIGS. 11A to 11C illustrate an example of an E2 setup request message for providing a version number of a 3GPP specification according to an embodiment. The E2 setup procedure according to the currently defined procedure may have a problem that the RIC 1100 (e.g., near-RT RIC) does not know the 3GPP specification version of an interface supported by the E2 node 1000. Accordingly, a method for informing the RIC 1100 (e.g., near-RT RIC) of the 3GPP specification version of the interface supported in the E2 node 1000 is described with reference to FIGS. 11A to 11C below.

Referring to FIG. 11A, the E2 node 1000 may transmit an E2 setup request message to the RIC 1100 (e.g., near-RT RIC). The RIC 1100 (e.g., near-RT RIC) may transmit an E2 setup response message to the E2 node 1000. Although O-RAN specifies a base station as an E2 node, it may have an integrated deployment or a distributed deployment depending on its implementation scheme (e.g., virtualization) based on the 3GPP specification. For example, the base station that is a gNB may have an integrated deployment in which a CU and a DU are configured together. In another example, the base station that is a gNB may have a 2-split deployment in which the CU and the DU are separated. In yet another example, the base station that is a gNB may have a 3-split deployment in which each of the CU-CP, the CU-UP, and the DU is separated.

The E2 setup request message transmitted to the RIC 1100 (e.g., near-RT RIC) may include a structure defined in the E2 application protocol (E2AP) specification (e.g., O-RAN specification E2AP 2.0). For example, the E2 setup request message may include information according to the following structure.

**[Table 2]**

| |
|---|
| IE/Group Name |
| Message Type |
| Transaction ID |
| Global E2 Node ID |
| RAN Functions Added List |
| >RAN Function item |
| >>RAN Function ID |
| >>RAN Function Definition |
| >>RAN Function Revision |
| >>RAN Function OID |
| E2 Node Component Configuration Addition List |
| >E2 Node Component Configuration Addition Item |
| >>E2 Node Component Interface Type |
| >>E2 Node Component ID |
| >>E2 Node Component Configuration |

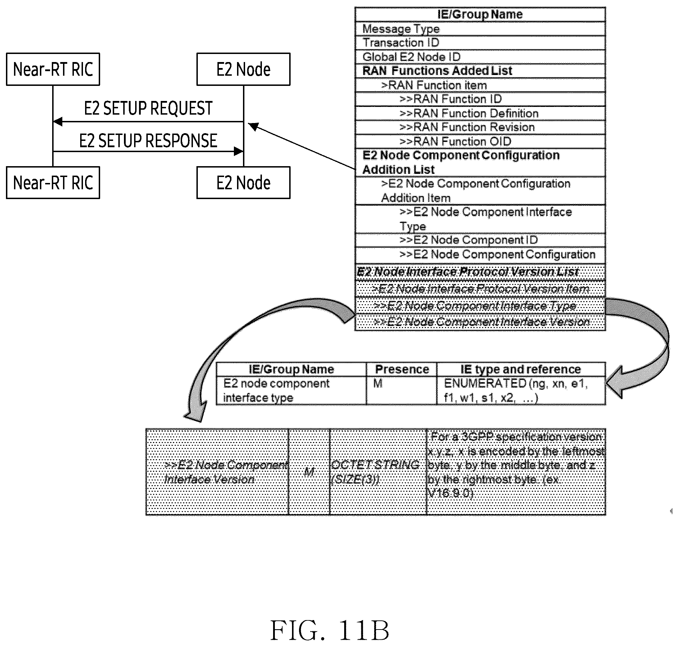

FIG. 11B illustrates an example of an E2 setup request message including an IE to indicate a version number of the 3GPP specification of an interface supported by an E2 node 1000 according to an embodiment. In the E2 setup request procedure with the RIC 1100 (e.g., near RT RIC), the E2 node 1000 (e.g., gNB, gNB-CU, gNB-DU, eNB-CU, eNB-DU) may add the IE to indicate the version number of the 3GPP specification of the interface supported in the E2 node 1000 to the structure of the E2 setup request message defined in the O-RAN E2AP specification. For example, the E2 node 1000 may add the IE specified in the following table 3 to the end of the E2 setup request message.

**[Table 3]**

| | | | |
|---|---|---|---|
| E2 Node Interface Protocol Version List | | 1 | |
| >E2 Node Interface Protocol Version Item | | 1..7.. | |
| >>E2 Node Component Interface Type | M | | 9.2.26 |
| >>E2 Node Component Interface Version | M | OCTET STRING (SIZE(3)) | For a 3GPP specification version x.y.z, x is encoded by the leftmost byte, y by the middle byte, and z by the rightmost byte. (e.g., V16.9.0) |

The E2 setup request message including the IE may be used to encode and transmit the 3GPP specification number for each 3GPP I/F (up to 7) in 3-octet string. Please note that the 3-octet string is just one example, the 3GPP specification number for each 3GPP I/F may be represented with different numbers of octet strings or any other strings, such as two (2).

According to an embodiment, the E2 setup request message may include an IE indicating an interface type. For example, "E2 Node Component Interface Type" may refer to the interface type. For example, the interface type may be indicated as shown in the following table 4.

**[Table 4]**

| **IE/Group Name** | **Presence** | **Range** | **IE type and reference** | **Semantics description** |
|---|---|---|---|---|
| E2 node component interface type | M | | ENUMERATED (ng, xn, e1, f1, w1, s1, x2, ...) | |

According to an embodiment, the E2 setup request message may include an IE indicating a version number of the 3GPP specification. For example, "E2 Node Component Interface Version" may indicate a version number. The version number may be indicated in the form of 'x,y,z'. In 3GPP, 'x' indicates a release of the standard specification, and 'y' and 'z' indicate a version in the corresponding release. Further, 'x' indicates a release submitted to or approved by the Technical Specification Group (TSG), 'y' indicates improvement, correction, or update of the corresponding technology, and 'z' indicates a version that is changed by editing. In Table 3 are described three octet strings to indicate a version number in the form of 'x, y, z', but embodiments of the disclosure are not limited thereto. According to another embodiment, the E2 node 1000 may indicate a standard version of the interface based on the form of 'x, y' in order to reduce the size of a field. The E2 node 1000 may indicate the standard version of the interface with two octet strings.

The following is a list of all I/Fs supported by the E2 node 1000.

**[Table 5]**

| **I/F type** | **Semantics description** |
|---|---|
| ng | v16.9.0 |
| xn, | v16.9.0 |
| e1 | v16.9.0 |
| F1 | v16.9.0 |
| W1 | v16.9.0 |
| S1 | v16.9.0 |
| X2 | v16.9.0 |
| ... | |

The E2 node 1000 may provide a version number supported in each interface to the RIC 1100 (e.g., near-RT RIC). Accordingly, the RIC 1100 (e.g., near-RT RIC) may select a function for each version of the standard and provide the selected function to the E2 node 1000.

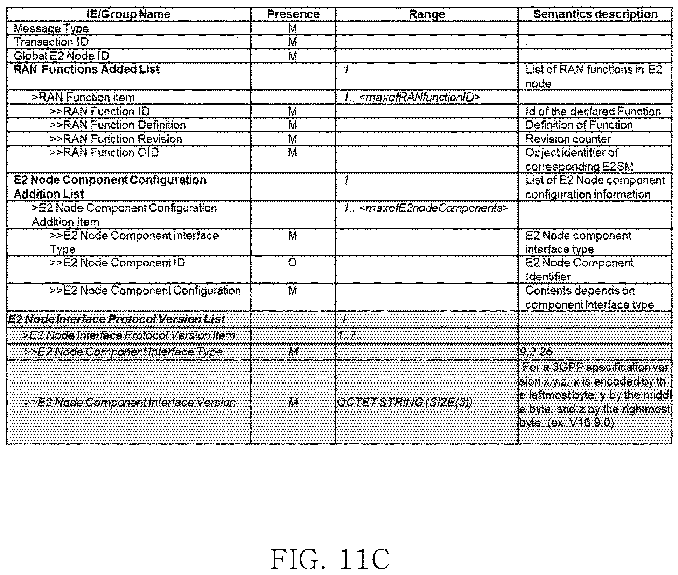

FIG. 11C illustrates an example of an overall structure of an E2 setup request message including an IE for indicating a version number of the 3GPP specification. As seen in FIG. 11C, the IE (e.g., Table 3) for indicating the version number of the 3GPP specification proposed in the present embodiment is included in the bottom end of the E2 setup request message, so that backward compatibility can be supported.

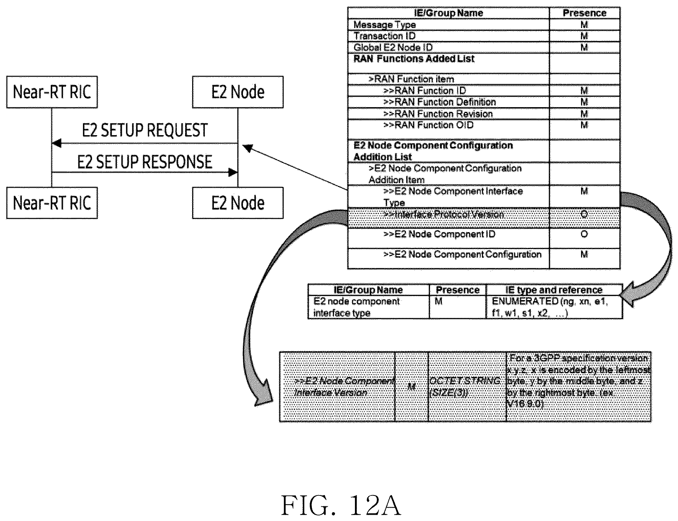

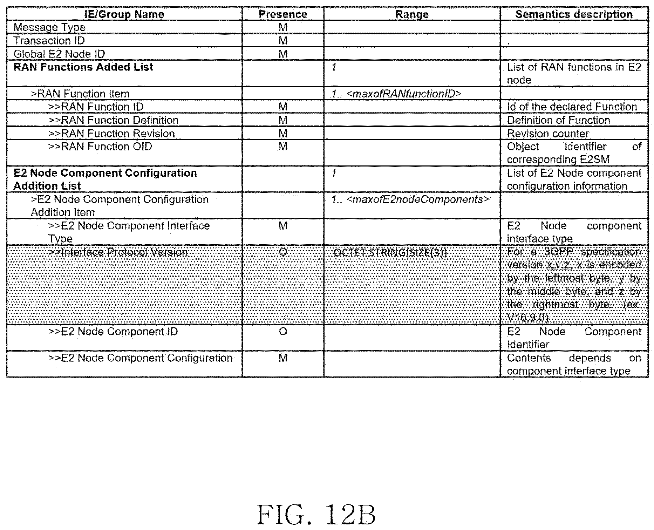

FIGS. 12A to 12D each illustrate an example of E2 node configuration information for providing a version number of the 3GPP specification according to an embodiment. In FIGS. 12A to 12D is shown a scheme of adding an IE for indicating a version number of the 3GPP specification in the E2 node configuration information (e.g., E2 Node Component Configuration Addition Item IE of Table 3) of the existing E2 setup request message (e.g., E2 setup request message with the structure of Table 2), which is further proposed in the disclosure. The E2 node configuration information may include configuration information for each type of E2 node. In the E2 node 1000, the information for indicating the version number of the 3GPP specification (e.g., 'E2 Node Component Interface Version' IE of Table 3) may be added to an area related to information indicating the interface type of the E2 node 1000. In other words, the information for indicating the version number of the 3GPP specification according to an embodiment may be added to the configuration information for each interface type included in the existing E2 setup request message.

Referring to FIGS. 12A to 12B, the information for indicating the version number of the 3GPP specification (e.g., 'Interface Protocol Version' IE) may be added next to the information indicating the interface type of the E2 node 1000. The version number of the 3GPP specification may be related to a previous interface type. For example, in case where 'E2 Node Component Interface Type' IE of the E2 setup request message indicates 'xn', the version number of the 3GPP specification may indicate a specification version (e.g., 16.8.0) of TS 38.423. Further, for example, in case where the 'E2 Node Component Interface Type' IE of the E2 setup request message indicates ' f1', the version number of the 3GPP specification may indicate a specification version (e.g., 16.8.0) of TS 38.473. The specification number according to the E2 node component type may be defined as follows:
(1) NG Interface: TS 38.413;
(2) XN Interface: TS 38.423;
(3) E1 Interface: TS 38.413;
(4) F1 Interface: TS 38.463;
(5) W1 Interface: TS 37.473;
(6) S1 Interface: TS 36.413; and
(7) X2 Interface: TS 36.423.

Hereinafter, the disclosure describes seven interfaces and seven specifications by way of example, but a 3GPP specifications for each interface type may be added thereto as additional specifications is in progress.

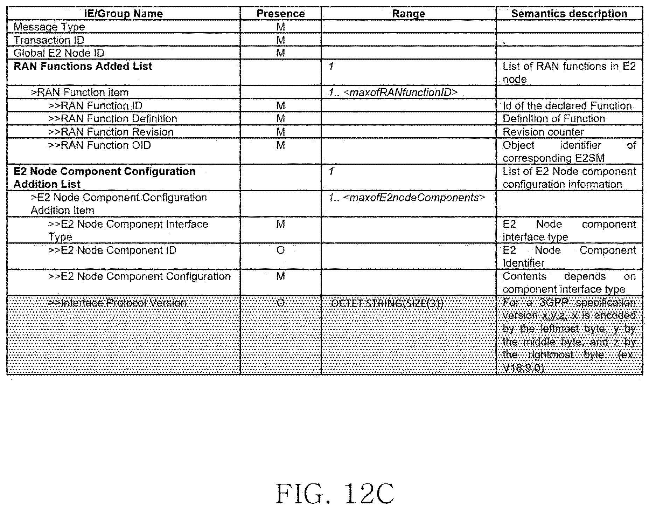

Referring to FIG. 12C, the information for indicating the version number of the 3GPP specification may be disposed at the end of configuration information for each type of E2 node. For example, the information for indicating the version number of the 3GPP specification (e.g., 'Interface Protocol Version' IE) may be added next to the 'E2 Node Component configuration' IE of the configuration information. For backward compatibility, the information for indicating the version number of the 3GPP specification may be optionally included (e.g., optional, O).

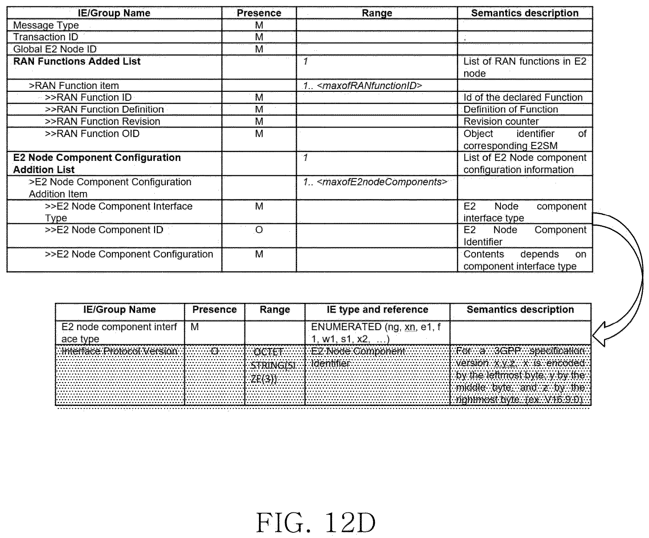

Referring to FIG. 12D, the information (e.g., 'Interface Protocol Version' IE) for indicating the version number of the 3GPP specification may be disposed in the 'E2 Node Component Interface Type' IE. For example, the 'E2 Node Component Interface Type' IE may be configured as shown in the following Table 6.

**[Table 6]**

| **IE/Group Name** | **Presence** | **Range** | **IE type and reference** | **Semantics description** |
|---|---|---|---|---|
| E2 node component interface type | M | | ENUMERATE D (ng, xn, e1, f1, w1, s1, x2, ...) | |
| Interface Protocol Version | O | OCTET STRING (SIZE (3)) | E2 Node Component Identifier | For a 3GPP specification version x.y.z, x is encoded by the leftmost byte, y by the middle byte, and z by the rightmost byte. (e.g., V16.9.0) |

Although FIGS. 11A to 12D describes the examples of indicating each of the interface type and the interface protocol version, the embodiments of the disclosure are not limited thereto. According to an embodiment, the E2 setup request message may include an IE indicating the 3GPP specification number common to at least two interface types. Each 3GPP specification may be updated at the same or adjacent timing. As shown in Table 10, the specifications for different interfaces may be updated in the same year and month. Therefore, instead of indicating the version of the specification for each interface, a common version of the specification may be indicated. For example, the following IE may be added to the end of the E2 setup request message.

**[Table 7]**

| | | | |
|---|---|---|---|
| E2 Node Component Interface Version | M | OCTET STRING (SIZE(3)) | For a 3GPP specification version x.y.z, x is encoded by the leftmost byte, y by the middle byte, and z by the rightmost byte. (e.g., V16.9.0) |

In the disclosure, information for identifying an interface type may be used to identify the interface type from the information in a node receiving the information. For example, the information for identifying the interface type may indicate a specific value among candidate values of the interface type (e.g., ng, xn, e1, f1, w1, s1, and x2). The node receiving the information may identify an interface type corresponding to the specific value. Also, for example, the information for identifying the interface type may include data representing the interface type. The node receiving the information may identify an interface type associated with the data. In the disclosure, information for identifying a version of a communication protocol may be used to identify a version of the communication protocol from the information in a node receiving the information. For example, the information for identifying the version of the communication protocol may include a bit sequence. The node receiving the information may identify a version corresponding to a value indicated by the bit string. The node receiving the information may determine that the version is associated with functions supportable by the application protocol of the identified interface type. The version may indicate a capability range comprising functions supported by the corresponding protocol.

According to embodiments, the information for identifying the version of the communication protocol may include bit sequences. For example, the information for identifying the version of the communication protocol may include one or more octet strings. Each octet string represents a sequence of a byte or octets used to represent binary data. An octet string may consist of an 8-bit integer. Octet strings can be used to represent binary data in network protocols and network device management. The node receiving the information for identifying the version of the communication protocol can identify the version of the communication protocol based on decoding of the information. For example, information for identifying the version of the communication protocol may obtain a plurality of octet strings (e.g., 3 octet strings) through the decoding. The node may obtain a value corresponding to each octet string. The node may identify (or determine) the version of the communication protocol based on the obtained values.

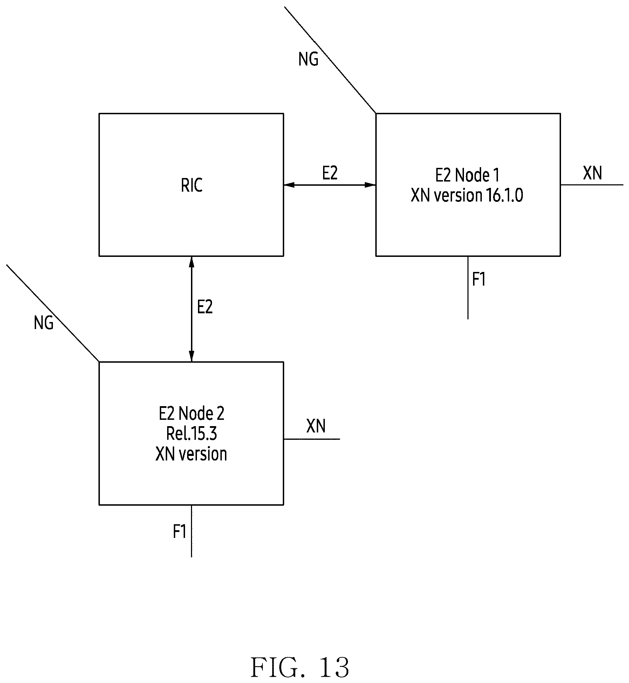

FIG. 13 illustrates an example of a function related to dual connectivity (DC) based on a version number of a 3GPP specification according to an embodiment. The DC is a technology for a UE to be connected to two different radio resource entities and to use radio resources allocated by each radio resource entity. In MR-DC, a UE in a radio resource control (RRC) connection state (i.e., RRC_CONNECTED) may be configured to utilize radio resources provided by two independent schedulers. Each scheduler may be located at an NG-RAN node (e.g., a first E2 node and a second E2 node). Here, one node may be a master node (MN) and the other node may be a secondary node (SN). The MN and the SN may be connected through a network interface, and the MN may be connected to a core network. The SN may or may not be connected to the core network. Types of possible DCs may be defined as follows.

**EN-DC:** Dual connectivity in which an eNB is connected to an evaded packet core (EPC) and a terminal is connected to an eNB acting as an MN and a gNB acting as an SN, wherein the gNB may be referred to as en-gNB, and the en-gNB may or may not be connected to the EPC. EN-DC can be supported from the release 15.

**NGEN-DC:** Dual connectivity in which an eNB is connected to a 5GC (5G core) and a terminal is connected to an eNB acting as an MN and a gNB acting as an SN, wherein the eNB may be referred to as ng-eNB.

**NE-DC:** Dual connectivity in which the gNB is connected to the 5GC and a terminal is connected to a gNB acting as an MN and an eNB operating as an SN, wherein the eNB may be referred to as ng-eNB.

**NR-DC:** Dual connectivity in which gNBs are connected to the 5GC and a terminal is connected to a gNB acting as an MN and a gNB acting as a SN, wherein NR-DC may be also used when the UE is connected to a single gNB to act as both the MN and SN and to configure both a master cell group (MCG) and a secondary cell group (SCG).

Referring to FIG. 13, two base stations may be implemented as E2 nodes, for DC. In FIG. 13, MR-DC for NR-NR DC is described as an example. Each of the two E2 nodes (an E2 Node 1 1000A and an E2 Node 2 1000B) configured with DC may be connected to the RIC 1100 (e.g., near-RT RIC). To configure the DC, the RIC 1100 (e.g., near-RT RIC) may perform a setup procedure with each E2 node.

For example, the E2 node 1 1000A may be an O-CU that supports the version 16.1.0 of Rel.16 XNI/F. The E2 node 2 1000B may be an O-CU supporting the version 15.3.0 of Rel.15 XNI/F. The RIC 1100 (e.g., near-RT RIC) may identify whether the E2 node 2 1000B supports a message procedure related to MR-DC and IEs. As opposed to EN-DC supported in the Release 15, the MR-DC may require a 3GPP specification according to the Release 16. The RIC 1100 (e.g., near-RT RIC) may identify that the E2 node 2 1000B does not support NR-NRDC. Then, the RIC 1100 (e.g., near-RT RIC) may not transmit a control message related to NR-NRDC of the E2 node 2 1000B, or may explicitly transmit a response message informing the E2 node 2 1000B that the support of NR-NRDC is difficult. The RIC 1100 (e.g., near-RT RIC) may perform a RAN control operation based on the version number (e.g., 15.3.0) of the 3GPP specification (e.g., TS 38.423) received from the E2 node (the E2 Node 1 1000A or the E2 Node 2 1000B).

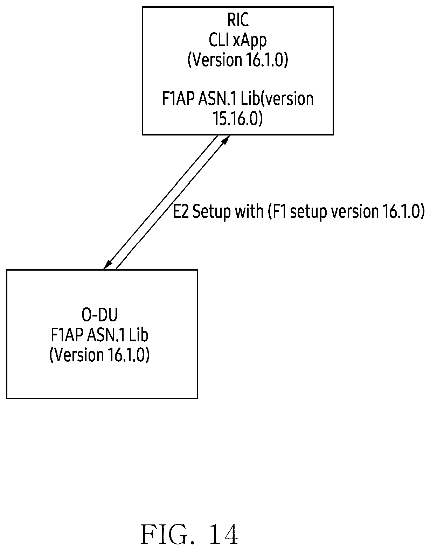

FIG. 14 illustrates an example of a cross-link interference (CLI) related function according to a version number of a 3GPP specification according to an embodiment. The CLI may refer to interference in a situation in which UL transmission of one cell prevents DL reception of another cell when different TDD DL/UL patterns are used between neighboring cells. In Release 16 of the 3GPP specification, in order to mitigate the CLI, gNBs may adjust TDD DL-UL configuration via an XN or F1 interface. Further, a victim UE may perform CLI measurements.

Referring to FIG. 14, a library of F1AP ASN(abstract syntax notation).1 of the RIC 1100 (e.g., near-RT RIC) may support TS 38.473 v15.16.0. ASN.1 is a standardized notation used to describe a data structure of messages exchanged between communication entities. ASN.1 is a notation with a long history of reliability and interoperability that can support exchanging of information in any form (e.g., audio, video, data). xAPP of RIC 1100 (e.g., near-RT RIC) may support a CLI-related feature based on TS 38.473 g10 (i.e., version 16.1.0). O-DU may support TS 38.473 g10 (i.e., version 16.1.0).

The xApp of RIC 1100 (e.g., near-RT RIC) may support a CLI-related feature (e.g., provision of Intended TDD DL-UL Configuration IE (optional)) based on TS 38.473 g10 (i.e., version 16.1.0).

DU may support TS 38.473 g10 (i.e., version 16.1.0). For example, the O-DU 820 may transmit an E2 setup request message including F1 setup to the RIC 1100. Here, information on the F1 setup may be generated based on an F1AP version of the ASN.1 library in the O-DU 820. The F1AP version of the ASN.1 library in the O-DU 820 is different from the F1AP version of the ASN.1 library on the RIC 1100. Because the RIC 1100 supports F1AP versions (e.g., v15.16.0) that are lower than the F1AP version (e.g., v16.1.0) supported by the O-DU 820, the RIC 1100 may fail in decoding the information received from the O-DU 820. Thus, although the corresponding information may be delivered to the RIC 1100 in O-DU 820, the ASN.1 decoding may fail in E2AP. In this case, when the F1 version can be identified in the RIC 1100 (e.g., near-RT RIC) according to an additional embodiment, the RIC 1100 (e.g., near-RT RIC) can perform an additional operation based on the identified 3GPP version information. For example, the RIC 1100 (e.g., near-RT RIC) can perform the additional operation referring to other functions (e.g., xAPP) within the RIC 1100 (e.g., near-RT RIC). If the RIC 1100 (e.g., near-RT RIC) can identify the information for F1 setup from other services via xAPP, the RIC 1100 (e.g., near-RT RIC) may request a higher version of information from the O-DU 820 (e.g., v16.1.0). For example, the RIC 1100 (e.g., near-RT RIC) may request information for RAN control of the E2 node 1000 from the O-DU 820 and receive the information for RAN control from the E2 node 1000 or another E2 node, through the CLI xAPP. Further, for example, the compatibility of the 3GPP version may be identified during an interoperability test.

FIG. 15 illustrates an example of a RIC service update procedure for providing a version number of a 3GPP specification according to one or more embodiments. The RIC Service Update procedure is used to update application level configuration data needed for E2 Node and Near-RT RIC to interoperate correctly over the E2 interface.

Referring to FIG.15, in operation (1501), the E2 node 1000 may transmit a RIC service update message to the RIC 1000 (e.g., Near-RT RIC). The RIC service update message include include an appropriate set of up-to-date Near-RT RIC service-related configuration data, including, but not limited to, the complete lists of added, modified and deleted supported Near-RT RIC Service functions. For example, the RIC service update message may be configured as shown in the table below.

**[TABLE 8]**

| **IE/Group Name** | | | **Presence** | **Range** | **IE type and reference** | **Semantics description** | **Criticality** | **Assigned Criticality** |
|---|---|---|---|---|---|---|---|---|
| Message Type | | | M | | 9.2.3 | | YES | reject |
| Transaction ID | | | M | | 9.2.33 | . | YES | reject |
| **RAN Functions Added List** | | | | *0..1* | | List of added RAN functions in E2 node | | |
| | >RAN Functions Item | | | 1 .. *<maxofRANfunctionID>* | | | YES | reject |
| | | >>RAN Function ID | M | | 9.2.8 | Id of the declared Function | - | |
| | | >>RAN Function Definition | M | | 9.2.23 | Definition of Function | - | |
| | | >>RAN Function Revision | M | | 9.2.24 | Revision counter | - | |
| | | >>RAN Function OID | M | | 9.2.31 | Object identifier of corresponding E2SM | - | |
| **RAN Functions Modified List** | | | | *0..1* | | List of Modified RAN functions in E2 node | | |
| | >RAN Functions Item | | | *1* .. *<maxofRANfunctionID>* | | | YES | reject |
| | | >>RAN Function ID | M | | 9.2.8 | Id of the declared Function | - | |
| | | >>RAN Function Definition | M | | 9.2.23 | Definition of Function | - | |
| | | >>RAN Function Revision | M | | 9.2.24 | Revision counter | - | |
| | | >>RAN Function OID | M | | 9.2.31 | Object identifier of corresponding E2SM | - | |
| **RAN Functions Deleted List** | | | | *0..1* | | List of deleted RAN functions in E2 node | | |
| | >RAN Functions ID Item | | | *1* .. *<maxofRANfunctionID>* | | | YES | reject |
| | | >>RAN Function ID | M | | 9.2.8 | Id of the declared Function | - | |
| | | >>RAN Function Revision | M | | 9.2.24 | Revision counter | - | |

According to an embodiment, optionally, in operation 1505, the RIC 1100 (e.g., Near-RT RIC) may transmit a RIC service query message to the E2 node 1000 to request a service update. The Near-RT RIC may transmit the RIC service update message in response to the RIC service query message. For example, the RIC service query message may be configured as shown in the table below.

**[TABLE 9]**

| **IE/Group Name** | | | **Presenc e** | **Range** | **IE type and reference** | **Semantics description** | **Criticalit y** | **Assigned Criticality** |
|---|---|---|---|---|---|---|---|---|
| Message Type | | | M | | 9.2.3 | | YES | reject |
| Transaction ID | | | M | | 9.2.33 | . | YES | reject |
| **RAN Functions Accepted List** | | | | *0..1* | | Complete list of Functions previously accepted by Near-RT RIC | | |
| | >RAN Functions ID Item | | | *1* .. *<maxofRANfu nctionID*> | | | YES | reject |
| | | >>RAN Function ID | M | | 9.2.8 | Id of the declared Function | - | |
| | | >>RAN Function Revision | M | | 9.2.24 | Revision counter | - | |

In operation 1503, the RIC 1100 (e.g., Near-RT RIC) may transmit a RIC service update acknowledge message to the E2 node 1000. If at least one RAN Function update request present in the RIC SERVICE UPDATE message is successful, the RIC 1100 (e.g., Near-RT RIC) may send the RIC SERVICE UPDATE ACKNOWLEDGE message to the E2 Node 1000. RAN function information may be modified and/or deleted and, if required, RAN function rejected list IE that indicates a rejected request to add, modify, and/or delete corresponding RAN function information may be included in the RIC SERVICE UPDATE ACKNOWLEDGE message. For example, the RIC service update acknowledge message may be configured as shown in the table below.

**[TABLE 10]**

| **IE/Group Name** | | | **Presence** | **Range** | **IE type and reference** | **Semantics description** | **Criticality** | **Assigned Criticality** |
|---|---|---|---|---|---|---|---|---|
| Message Type | | | M | | 9.2.3 | | YES | reject |
| Transaction ID | | | M | | 9.2.33 | . | YES | reject |
| **RAN Functions Accepted List** | | | | *0..1* | | List of Functions accepted by Near-RT RIC | | |
| | >RAN Functions ID Item | | | *1* .. *<maxofRANfunctionID>* | | | YES | reject |
| | | >>RAN Function ID | M | | 9.2.8 | Id of the declared Function | - | |
| | | >>RAN Function Revision | M | | 9.2.24 | Revision counter | - | |
| **RAN Functions Rejected List** | | | | *0..1* | | List of Functions not accepted by Near-RT RIC | | |
| >RAN Functions Cause Item | | | | *1* .. *<maxofRANfunctionID>* | | | YES | reject |
| | | >>RAN Function ID | M | | 9.2.8 | Id of the declared Function | - | |
| | | >>Cause | M | | 9.2.1 | Reason for not accepting function | - | |

RAN functions accepted or rejected through the above described messages may be determined based on RAN function definition information (e.g., RAN Function Definition IE). The RAN function definition information may define a RAN function name and indicate RIC services that a specific RAN function is currently configured to provide through the E2 interface. The RAN function definition information may be provided through an E2 setup request procedure (e.g., FIGS. 11A to 12D) or an RIC service update procedure (e.g., FIG. 15). The RAN function definition information may be used to provide various information for Near-RT RIC in order to determine a scheme configured to support a RAN function-specific E2 service model (E2SM) in the E2 node.

According to an embodiment, a version of a communication protocol (i.e., standard) is related to a RAN function, and the RAN function definition information may include information for identifying the version.

The RAN function definition information may be dependent on a service model. For example, in a service model (e.g., E2SM-RC) for RAN control, the RAN function definition information may be configured as shown in the table below.

**[TABLE 11]**

| **IE/Group Name** | **Presence** | **Range** | **IE type and reference** | **Semantics description** |
|---|---|---|---|---|
| RAN Function Name | M | | 9.3.2 | |
| RAN Function Definition for EVENT TRIGGER | O | | 9.2.2.2 | |
| RAN Function Definition for REPORT | O | | 9.2.2.3 | |
| RAN Function Definition for INSERT | O | | 9.2.2.4 | |
| RAN Function Definition for CONTROL | O | | 9.2.2.5 | |
| RAN Function Definition for POLICY | O | | 9.2.2.6 | |
| RAN Function Definition for QUERY | O | | 9.2.2.7 | |
| 3GPP Version number | O | | 9.2.2.x | |

For another example, in a service model (e.g., E2SM-NI) for a RAN function network interface (NI), the RAN function definition information may be configured as shown in the table below.

**[TABLE 12]**

| **IE/Group Name** | | | | **Presence** | **Range** | **IE type and reference** | **Semantics description** |
|---|---|---|---|---|---|---|---|
| RAN Function Name | | | | M | | 8.3.2 | |
| Sequence of Network Interface Types | | | | | 1.. <maxofNItypes> | | |
| | >Network Interface Type | | | M | | 8.3.21 | |
| | >3GPP Version Number | | | O | | | |
| | >Sequence of Event trigger styles | | | | 0.. <maxofRICstyles> | | |
| | | >>RIC Event Trigger Style Type | | M | | 8.3.3 | ID of Event trigger style |
| | | >>RIC Event Trigger Style Name | | M | | 8.3.4 | Name of Event trigger style |
| | | >>RIC Event Trigger Format Type | | M | | 8.3.5 | Event trigger format used by Event trigger style |
| | >Sequence of Report styles | | | | 0.. <maxofRICstyles> | | |
| | | >>RIC Report Style Type | | M | | 8.3.3 | ID of Report style |
| | | >>RIC Report Style Name | | M | | 8.3.4 | Name of Report style |
| | | >>RIC Report Action Format Type | | M | | 8.3.5 | Action definition format used by Report style |
| | | >>Sequence of RAN parameters for Action | | | 0.. <maxofRANparameters> | | RAN parameters used by Report style |
| | | | >>>RAN Parameter ID | M | | 8.3.7 | |
| | | | >>>RAN Parameter Name | M | | 8.3.10 | |
| | | | >>>RAN Parameter Type | M | | 8.3.6 | |
| | | >>RIC Indication Header Format Type | | M | | 8.3.5 | Indication header format used by Report style |
| | | >>RIC Indication Message Format Type | | M | | 8.3.5 | Indication message format used by Report style |
| | >Sequence of Insert styles | | | | 0.. <maxofRICstyles> | | |
| | | >>RIC Insert Style Type | | M | | 8.3.3 | ID of Insert style |
| | | >>RIC Insert Style Name | | M | | 8.3.4 | Name of Insert style |
| | | >>RIC Insert Action Format Type | | M | | 8.3.5 | Action definition format used by Insert style |
| | | >>Sequence of RAN parameters for Action | | | 0.. <maxofRANparameters> | | RAN parameters used by Insert style |
| | | | >>>RAN Parameter ID | M | | 8.3.7 | |
| | | | >>>RAN Parameter Name | M | | 8.3.10 | |
| | | | >>>RAN Parameter Type | M | | 8.3.6 | |
| | | >>RIC Indication Header Format Type | | M | | 8.3.5 | Indication header format used by Insert style |
| | | >>RIC Indication Message Format Type | | M | | 8.3.5 | Indication message format used by Insert style |
| | | >>RIC Call Process ID Format Type | | M | | 8.3.5 | Call Processs ID format used by Insert style |
| | >Sequence of Control styles | | | | 0.. <maxofRICstyles> | | |
| | | >>RIC Control Style Type | | M | | 8.3.3 | ID of Control style |
| | | >>RIC Control Style Name | | M | | 8.3.4 | Name of Control style |
| | | >>RIC Control Header Format Type | | M | | 8.3.5 | Control header format used by control style |
| | | >>RIC Control Message Format Type | | M | | 8.3.5 | Control message format used by control style |
| | | >>RIC Call Process ID Format Type | | M | | 8.3.5 | Call Processs ID format used by control style |
| | | >>RIC Control Outcome Format Type | | M | | 8.3.5 | Call Processs ID format used by control style |
| | | >>Sequence of RAN parameters for Control Outcome | | | 0.. <maxofRANparameters> | | RAN parameters used by Control Outcome style |
| | | | >>>RAN Parameter ID | M | | 8.3.7 | |
| | | | >>>RAN Parameter Name | M | | 8.3.10 | |
| | | | >>>RAN Parameter Type | M | | 8.3.6 | |
| | >Sequence of Policy styles | | | | 0.. <maxofRICstyles> | | |
| | | >>RIC Policy Style Type | | M | | 8.3.3 | |
| | | >>RIC Policy Style Name | | M | | 8.3.4 | |
| | | >>RIC Policy Action Format Type | | M | | 8.3.5 | Action definition format used by Policy style |
| | | >>Sequence of RAN parameters for Action | | | 0.. <maxofRANparameters> | | RAN parameters used by Policy style |
| | | | >>>RAN Parameter ID | M | | 8.3.7 | |
| | | | >>>RAN Parameter Name | M | | 8.3.10 | |
| | | | >>>RAN Parameter Type | M | | 8.3.6 | |

In Tables 11 and 12 described above, the '3GPP Version number' IE may be replaced with another name. For example, IEs called as 'version', 'communication protocol version', and/or 'protocol' may be used to indicate the version of the communication protocol.

Different version information of the 3GPP specification between two network entities (e.g., E2 node 1000 and RICs 1100) may cause compatibility problems. For example, the RIC 1100 (e.g., near-RT RIC) may receive IEs from the E2 node 1000. In such a circumstance, for an IE supported only in the higher version, the RIC 1100 (e.g., near-RT RIC) may skip its decoding. In addition to the case where the decoding fails, as shown in FIG. 14, the decoding may be even skipped. Therefore, if the RIC 1100 (e.g., near-RT RIC) does not receive specific information, it would be unable to know whether the specific information did not come due to its lower version or was not transmitted from the E2 node 1000. As described above, the level of recognition between the RICs 1100 for a specific message may be different from the information of the E2 node 1000 for the specific message. Such difference may cause an error in the control of the RIC 1100 (e.g., near-RT RIC). Therefore, the E2 node 1000 and the RIC 1100 (e.g., near-RT RIC) according to embodiments of the disclosure can reduce the above-described errors and increase the communication performance of the E2 interface, owing to sharing an interface type and the version information of the 3GPP specification for the interface type.

According to embodiments, a method performed by an E2 node may include transmitting, to a near-real time (RIC) radio access network (RAN) intelligent controller (near-RT RIC), an E2 setup request message. The method may include receiving, from the near-RT RIC, an E2 setup response message. The E2 setup request message may include information for identifying an interface type of the E2 node and information for identifying a version of a communication protocol corresponding to the interface type.

According to an embodiment, the information for identifying the interface type of the E2 node may include any one of X2 interface, Xn interface, F1 interface, S2 interface, E2 interface, NG interface, or W1 interface. The 3GPP specification may include an application protocol according to any one of technical specification (TS) 36.423, TS 38.423, TS 38.473, TS 36.413, TS 38.463, TS 38.413, or TS 37.473.

According to an embodiment, the E2 setup request message may include information element (IE) for an E2 node component configuration addition list. The IE may include the information for identifying the interface type of the E2 node and the information for identifying the version of the communication protocol.

According to an embodiment, the E2 setup request message may include information element (IE) for an E2 node component interface type of an E2 node component configuration. The IE may include the information for identifying the interface type of the E2 node and the information for identifying the version of the communication protocol.

According to an embodiment, the version may be indicated based on three octet strings of the information for identifying the version of the communication protocol. The three octet strings may include a first octet string that indicates release information, a second octet string that indicates update information of the release information, and a third octet string that indicates editorial information.

According to embodiments, a method performed by a near-real time (RT) radio access network (RAN) intelligent controller (near-RT RIC) may comprise receiving, from an E2 node, an E2 setup request message. The method may comprise transmitting, to the E2 node, an E2 setup response message. The E2 setup request message may information for identifying an interface type of the E2 node and information for identifying a version of a communication protocol corresponding to the interface type.

According to an embodiment, the information for identifying the interface type of the E2 node may include one of X2 interface, Xn interface, F1 interface, S2 interface, E2 interface, NG interface, or W1 interface. The communication protocol may include an application protocol according to one of technical specification (TS) 36.423, TS 38.423, TS 38.473, TS 36.413, TS 38.463, TS 38.413, or TS 37.473.

According to an embodiment, the E2 setup request message may include information element (IE) for an E2 node component configuration addition list. The IE may include the information for identifying the interface type of the E2 node and the information for identifying the version of the communication protocol.

According to an embodiment, the E2 setup request message may include information element (IE) for an E2 node component interface type of an E2 node component configuration. The IE may include the information for identifying the interface type of the E2 node and the information for identifying the version of the communication protocol.

According to an embodiment, the version may be indicated based on three octet strings of the information for identifying the version of the communication protocol. The three octet strings may include a first octet string that indicates release information, a second octet string that indicates update information of the release information, and a third octet string that indicates editorial information.

According to an embodiment, the method comprises identifying whether abstract syntax notation one (ASN1) library supports the version or not. The method comprises, in case that the ASN1 library does not support the version, identifying whether a function according to the version is supported in the Near-RT RIC or not, based on xApp of the Near-RT RIC. The method comprises, in case that the function is supported in the Near-RT RIC, transmitting a request message for ASN1 library supporting the version to the E2 node through the xApp.

According to embodiments, a device of an E2 node may comprise at least one transceiver, and at least one processor coupled to the at least one transceiver. The at least one processor may be configured to transmit, to a near-real time (RT) radio access network (RAN) intelligent controller (near-RT RIC), an E2 setup request message. The at least one processor may be configured to receive, from the near-RT RIC, an E2 setup response message. The E2 setup request message may include information for identifying an interface type of the E2 node and information for identifying a version of a communication protocol corresponding to the interface type.

According to an embodiment, the information for identifying the interface type of the E2 node may include one of X2 interface, Xn interface, F1 interface, S2 interface, E2 interface, NG interface, or W1 interface. The communication protocol may include an application protocol according to one of technical specification (TS) 36.423, TS 38.423, TS 38.473, TS 36.413, TS 38.463, TS 38.413, or TS 37.473.

According to an embodiment, the E2 setup request message may include information element (IE) for an E2 node component configuration addition list. The IE may include the information for identifying the interface type of the E2 node and the information for identifying the version of the communication protocol.

According to an embodiment, the E2 setup request message may include information element (IE) for an E2 node component interface type of an E2 node component configuration. The IE may include the information for identifying the interface type of the E2 node and the information for identifying the version of the communication protocol.

According to an embodiment, the version may be indicated based on three octet strings of the information for identifying the version of the communication protocol. The three octet strings may include a first octet string that indicates release information, a second octet string that indicates update information of the release information, and a third octet string that indicates editorial information.

According to embodiments, a device of a near-real time (RT) radio access network (RAN) intelligent controller (near-RT RIC) may comprise at least one transceiver, and at least one processor coupled to the at least one transceiver. The at least one processor may be configured to receive, from an E2 node, an E2 setup request message. The at least one processor may be configured to transmit, to the E2 node, an E2 setup response message. The E2 setup request message may include information for identifying an interface type of the E2 node and information for identifying a version of a communication protocol corresponding to the interface type.

According to an embodiment, the information for identifying the interface type of the E2 node may include one of X2 interface, Xn interface, F1 interface, S2 interface, E2 interface, NG interface, or W1 interface. The communication protocol may include an application protocol according to one of technical specification (TS) 36.423, TS 38.423, TS 38.473, TS 36.413, TS 38.463, TS 38.413, or TS 37.473.

According to an embodiment, the E2 setup request message may include information element (IE) for an E2 node component configuration addition list. The IE may include the information for identifying the interface type of the E2 node and the information for identifying the version of the communication protocol.

According to an embodiment, the E2 setup request message may include information element (IE) for an E2 node component interface type of an E2 node component configuration. The IE may include the information for identifying the interface type of the E2 node and the information for identifying the version of the communication protocol.

According to an embodiment, the version may be indicated based on three octet strings of the information for identifying the version of the communication protocol. The three octet strings may include a first octet string that indicates release information, a second octet string that indicates update information of the release information, and a third octet string that indicates editorial information.

According to an embodiment, the at least one processor is configured to identify whether abstract syntax notation one (ASN1) library supports the version or not. The at least one processor is configured to, in case that the ASN1 library does not support the version, identify whether a function according to the version is supported in the Near-RT RIC or not, based on xApp of the Near-RT RIC. The at least one processor is configured to, in case that the function is supported in the Near-RT RIC, control the at least one transceiver to transmit a request message for ASN1 library supporting the version to the E2 node through the xApp.

According to embodiments, a non-transitory computer-readable medium is provided. The non-transitory computer-readable comprise a memory storing a program including instructions. When the instructions are executed by a processor of an E2 node, the instructions cause the E2 node to transmit, to a near-real time (RT) radio access network (RAN) intelligent controller (near-RT RIC), an E2 setup request message and to receive, from the near-RT RIC, an E2 setup response message. The E2 setup request message may include information for identifying an interface type of the E2 node and information for identifying a version of a communication protocol corresponding to the interface type.

According to embodiments, a non-transitory computer-readable medium is provided. The non-transitory computer-readable comprise a memory storing a program including instructions. When the instructions are executed by a processor of a near-real time (RT) radio access network (RAN) intelligent controller (near-RT RIC), the instructions cause the Near-RT RIC to receive, from an E2 node, an E2 setup request message and to transmit, to the E2 node, an E2 setup response message. The E2 setup request message may information for identifying an interface type of the E2 node and information for identifying a version of a communication protocol corresponding to the interface type.

According to an embodiment, a method performed by an E2 node includes transmitting, to a Near-real time (RT) radio access network (RAN) intelligent controller (RIC), an E2 setup request message. The method includes receiving, from the near-RT RIC, an E2 setup response message. The E2 setup request message includes a message type of the E2 setup request message, a transaction ID of the E2 setup request message, a global ID of the E2 node, RAN function added list including RAN function ID, RAN function definition information, RAN revision information, and RAN object ID (OID), information for identifying an interface type of the E2 node, and information for identifying a version of a communication protocol corresponding to the interface type.

According to an embodiment, a method performed by a Near-real time (RT) radio access network (RAN) intelligent controller (RIC) includes receiving, from an E2 node, an E2 setup request message. The method includes transmitting, to the E2 node, an E2 setup response message. The E2 setup request message includes a message type of the E2 setup request message, a transaction ID of the E2 setup request message, a global ID of the E2 node, RAN function added list including RAN function ID, RAN function definition information, RAN revision information, and RAN object ID (OID), information for identifying an interface type of the E2 node, and information for identifying a version of a communication protocol corresponding to the interface type.

In the above-described embodiments, the description has been made of examples in which the E2 setup request message includes the information indicating the version information of the 3GPP specification, but the embodiments of the disclosure are not limited thereto. According to an embodiment, the information indicating the version information of the 3GPP specification may be included in the E2 setup response message. By receiving the version information of the 3GPP specification of the E2 setup response message, the E2 node may identify the version information on the interface of the E2 node identified by the near-RT RIC. According to another embodiment, the information indicating the version information of the 3GPP specification may be included in the E2 node configuration update message. In case where the version information of the 3GPP specification has not been delivered in the E2 setup procedure, the E2 node can provide the version information of the 3GPP specification of the interface to the near-RT RIC through the E2 node configuration update procedure.

Various embodiments of the disclosure may be implemented as software including one or more instructions stored in a storage medium readable by a machine (e.g., a device performing functions of the E2 node 1000, a device performing functions of the Near-RT RIC 1100). It can be. For example, a processor (e.g., controller 530) of the machine (e.g., E2 node 1000, Near-RT RIC 1100) calls at least one command among one or more instructions stored from a storage medium and enables the machine to be operated to perform at least one function according to the called at least one instruction. The one or more instructions comprises a code generated by a compiler or code executable by an interpreter. The storage medium readable by the machine may be provided in the form of a non-transitory storage medium. The term 'non-transitory' refers that the storage medium is tangible and does not contain signals (e.g., electromagnetic waves), and the term does not distinguish between the case where data is stored semi-permanently and temporarily stored in the storage medium. O-RAN makes it possible to configure a virtualized intelligent network with standardized open interfaces. For network virtualization, operations according to embodiments may be implemented in the form of a recording medium (e.g., memory).

According to an embodiment, the method according to various embodiments of the disclosure may be included and provided in a computer program product. The computer program product may be traded between sellers and buyers as commodities. The computer program product is distributed in the form of a device-readable storage medium (e.g., compact disc read only memory (CD-ROM)), or distributed (e.g., downloaded or uploaded) on online through an application store (e.g., Play Store^{™}) or between two user devices (e.g., smart phones) directly. In the case of online distribution, at least part of the computer program product may be temporarily stored or temporarily created in a storage medium readable by a device such as a manufacturer's server, an application store server, or a relay server's memory.

According to various embodiments, each component (e.g., module or program) of the above-described components may include a single entity or a plurality of entities, and some of the plurality of entities may be separately disposed in other components. According to various embodiments, one or more components or operations among the aforementioned corresponding components may be omitted, or one or more other components or operations may be added. Alternatively or additionally, a plurality of components (e.g., modules or programs) may be integrated into a single component. In this case, the integrated component may perform one or more functions of each of the plurality of components identically or similarly to those performed by a corresponding component of the plurality of components prior to the integration.. According to various embodiments, the operations performed by a module, program, or other component are executed sequentially, in parallel, iteratively, or heuristically, or one or more of the operations are executed in a different order, or omitted. or one or more other actions may be added.

The methods according to one or more embodiments described in the claims and/or the specification of the disclosure may be implemented in hardware, software, or a combination of hardware and software.

When implemented in software, a computer-readable storage medium storing one or more programs (software modules) may be provided. One or more programs stored in such a computer-readable storage medium are configured for execution by one or more processors in an electronic device. The one or more programs may include instructions that cause the electronic device to execute the methods according to embodiments described in the claims or specification of the disclosure.

Such a program (e.g., software module, software) may be stored in a random-access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs), other types of optical storage devices, or magnetic cassettes. Alternatively, it may be stored in a memory configured with a combination of some or all of the above. In addition, respective configured memories may be provided in a multiple number.

Further, the program may be stored in an attachable storage device capable of accessing via a communication network such as e.g., Internet, Intranet, local area network (LAN), wide area network (WAN), or storage area network (SAN), or a communication network configured with a combination thereof. Such a storage device may access an apparatus performing an embodiment of the disclosure through an external port. Further, a separate storage device on a communication network may access an apparatus performing an embodiment of the disclosure.

In specific embodiments of the disclosure described heretofore, the components included therein have been expressed in a singular or plural form according to an embodiment presented therein. However, such a singular or plural expression may be chosen appropriately for the presented context for the convenience of description, and the disclosure is not limited to that singular or plural components. Therefore, it is to be noted that even if any component is expressed in plural, it may be configured of a singular element, or even if any component is expressed in singular, it may be configured of a plural elements.

Meanwhile, although the specific embodiments have been described in the above detailed description of the disclosure, it will be apparent to those skilled in the art that various modifications are possible without departing from the scope of the disclosure.

## Claims

1. A method performed by an E2 node, the method comprising:
transmitting, to a near-real time (RT) radio access network (RAN) intelligent controller (RIC), an E2 setup request message; and
receiving, from the near-RT RIC, an E2 setup response message,
wherein the E2 setup request message comprises:
information for identifying an interface type of the E2 node, and
information for identifying a version of a communication protocol corresponding to the interface type.

2. The method of claim 1,
wherein the information for identifying the interface type of the E2 node comprises one of X2 interface, Xn interface, F1 interface, S2 interface, E2 interface, NG interface, or W1 interface, and
wherein the communication protocol comprises an application protocol according to a technical specification (TS) 36.423, TS 38.423, TS 38.473, TS 36.413, TS 38.463, TS 38.413, or TS 37.473.

3. The method of claim 1,
wherein the E2 setup request message comprises an information element (IE) for an E2 node component configuration addition list, and
wherein the IE comprises the information for identifying the interface type of the E2 node and the information for identifying the version of the communication protocol.

4. The method of claim 1,
wherein the E2 setup request message comprises an information element (IE) for E2 node component interface type of an E2 node component configuration addition item, and
wherein the IE comprises the information for identifying the interface type of the E2 node and the information for identifying the version of the communication protocol.

5. The method of claim 1,
wherein the version is indicated based on three octet strings of the information for identifying the version of the communication protocol, and
wherein the three octet strings comprise a first octet string that indicates release information, a second octet string that indicates update information of the release information, and a third octet string that indicates editorial information.

6. A method performed by a near-real time (RT) radio access network (RAN) intelligent controller (RIC), the method comprising:
receiving, from an E2 node, an E2 setup request message; and
transmitting, to the E2 node, an E2 setup response message,
wherein the E2 setup request message comprises:
information for identifying an interface type of the E2 node, and
information for identifying a version of a communication protocol corresponding to the interface type.

7. The method of claim 6,
wherein the information for identifying the interface type of the E2 node comprises one of X2 interface, Xn interface, F1 interface, S2 interface, E2 interface, NG interface, or W1 interface, and
wherein the communication protocol comprises an application protocol according to technical specification (TS) 36.423, TS 38.423, TS 38.473, TS 36.413, TS 38.463, TS 38.413, or TS 37.473.

8. The method of claim 6,
wherein the E2 setup request message comprises an information element (IE) for an E2 node component configuration addition list, and
wherein the IE comprises the information for identifying the interface type of the E2 node and the information for identifying the version of the communication protocol.

9. The method of claim 6,
wherein the E2 setup request message comprises an information element (IE) for E2 node component interface type of an E2 node component configuration addition item, and
wherein the IE comprises the information for identifying the interface type of the E2 node and the information for identifying the version of the communication protocol.

10. The method of claim 6,
wherein the version is indicated based on three octet strings of the information for identifying the version of the communication protocol, and
wherein the three octet strings comprise a first octet string that indicates release information, a second octet string that indicates update information of the version information, and a third octet string that indicates editorial information.

11. The method of claim 6, further comprising:
identifying whether abstract syntax notation one (ASN1) library supports the version or not;
in case that the ASN1 library does not support the version, identifying whether a function according to the version is supported in the Near-RT RIC or not, based on xApp of the Near-RT RIC; and
in case that the function is supported in the Near-RT RIC, transmitting a request message for ASN1 library supporting the version to the E2 node through the xApp.

12. A device of an E2 node, the device comprising:
at least one transceiver; and
at least one processor coupled to the at least one transceiver,
wherein the at least one processor is configured to:
transmit, to a near-real time (RT) radio access network (RAN) intelligent controller (RIC), an E2 setup request message, and
receive, from the near-RT RIC, an E2 setup response message,
wherein the E2 setup request message comprises:
information for identifying an interface type of the E2 node, and
information for identifying a version of a communication protocol corresponding to the interface type.

13. The device of claim 12,
wherein the at least one processor is configured to one of methods of claims 2 to 5.

14. A device of a near-real time (RT) radio access network (RAN) intelligent controller (RIC), the device comprising:
at least one transceiver; and
at least one processor coupled to the at least one transceiver,
wherein the at least one processor is configured to:
receive, from an E2 node, an E2 setup request message, and
transmit, to the E2 node, an E2 setup response message,
wherein the E2 setup request message comprises:
information for identifying an interface type of the E2 node, and
information for identifying a version of a communication protocol corresponding to the interface type.

15. The device of claim 14,
wherein the at least one processor is configured to one of methods of claims 7 to 11.
